(19) Europäisches Patentamt
European Patent Office
Office européen des brevets

(11) **EP 2 781 292 B1**

(12) **EUROPEAN PATENT SPECIFICATION**

(45) Date of publication and mention
of the grant of the patent:
**02.01.2019 Bulletin 2019/01**

(51) Int Cl.:
***B23K 9/173*** *(2006.01)*

(21) Application number: **14000702.2**

(22) Date of filing: **27.02.2014**

(54) **Tandem gas-shielded arc welding method**

Tandem-Schutzgasschweißverfahren

Procédé de soudage à l'arc sous gaz protecteur en tandem

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2013 JP 2013057326**

(43) Date of publication of application:
**24.09.2014 Bulletin 2014/39**

(73) Proprietor: **Kabushiki Kaisha Kobe Seiko Sho
(Kobe Steel, Ltd.)
Kobe-shi, Hyogo 651-8585 (JP)**

(72) Inventors:
• **Yuan, Yimin
Fujisawa-shi,
Kanagawa 251-0014 (JP)**

• **Yamazaki, Kei
Fujisawa-shi,
Kanagawa 251-0014 (JP)**
• **Suzuki, Reiichi
Fujisawa-shi,
Kanagawa 251-0014 (JP)**

(74) Representative: **Müller-Boré & Partner
Patentanwälte PartG mbB
Friedenheimer Brücke 21
80639 München (DE)**

(56) References cited:
**EP-A1- 2 193 869**

**Description**

BACKGROUND OF THE INVENTION

1. Field of the Invention

The present invention relates to a tandem gas-shielded arc welding method, which is a gas-shielded arc welding method using multiple electrodes.

2. Description of the Related Art

Nowadays, in addition to an increase in welding speed, stable deep penetration is required for horizontal fillet gas-shielded arc welding in the fields of bridge construction and shipbuilding. For example, Japanese Unexamined Patent Application Publication No. 2003-71590 discloses element composition of a flux-cored wire used in a horizontal fillet gas-shielded arc welding method performed with high current and at high speed. Japanese Unexamined Patent Application Publication No. 2003-71590 describes as follows: A flux to be filled into a flux-cored wire contains an arc stabilizer, which is made by adding a compound that contains $Na_2O$ and $TiO_2$ and $Na_2O$ and $TiO_2$ through single or multiple addition to a deoxidizer that contains appropriate amounts of Si and Mn contents. As a result, in welding, detachment and grain refining of a droplet are facilitated and the number of transfer of the droplet is increased, and accordingly, an arc is stabilized, spatter is reduced, and the flux filling ratio is reduced. Thus, the depth of penetration is increased.

In order to improve the stability of a basin and increase the welding speed in multiple-electrode horizontal fillet gas-shielded arc welding, for example, Japanese Unexamined Patent Application Publication No. 2004-261839 discloses the following welding method: that is, a leading electrode and a trailing electrode use a flux-cored wire for gas-shielded arc welding, a filler wire is inserted into the basin, which is molten metal between the leading and trailing electrodes, and welding is performed while allowing a current of positive polarity (filler wire has a negative polarity with respect to the molten metal) to flow through the filler wire. With the welding method described in Japanese Unexamined Patent Application Publication No. 2004-261839, the basin can be stabilized. Thus, high-speed welding can be performed while reducing spatter and obtaining a good bead shape.

Document EP-A-2 193 869 discloses a tandem gas-shielded arc welding method for performing horizontal fillet welding. The leading electrode and the trailing electrode are set at a torch angle between 40° and 60° with respect to the lower horizontal plate and both use a flux-cored electrode.

SUMMARY OF THE INVENTION

However, even when the welding method described in Japanese Unexamined Patent Application Publication No. 2003-71590 is used, as long as a flux-cored wire is used, the effect of increasing the depth of penetration is small and a significant improvement cannot be obtained.

With the welding method described in Japanese Unexamined Patent Application Publication No. 2004-261839, high-speed welding is realized but the depth of penetration is reduced as is the case with the Japanese Unexamined Patent Application Publication No. 2003-71590. Also with the welding method described in Japanese Unexamined Patent Application Publication No. 2004-261839, in order to obtain a good bead shape and appearance, torch angles of the leading electrode and the trailing electrode need to be set to angles the same to each other within a range from 40 to 60°. Here, in order to increase the depth of penetration in the horizontal direction, the torch angle may be set to less than 40°. However, in this case, undercut is likely to occur in a lower plate in addition to the above-described degradation in the bead shape and appearance.

The present invention is created in view of the above-described problem. An object of the present invention is to provide a tandem gas-shielded arc welding method for horizontal fillet welding, with which the amount of spatter to be produced is small, no undercut occurs, and the depth of penetration can be increased.

In order to solve the above-described problem, a tandem gas-shielded arc welding method according to the present invention uses a leading electrode and a trailing electrode to perform horizontal fillet welding, the method including setting the leading electrode and the trailing electrode such that the leading electrode and the trailing electrode have a reverse polarity, setting a torch angle $\theta_L$ of the leading electrode in the following range: $5° \leq \theta L < 40°$. The leading electrode uses a solid wire, and a carbon dioxide gas is used as a shielding gas for the leading electrode. The method also includes setting a torch angle $\theta_T$ of the trailing electrode in the following range: $40° \leq \theta T \leq 60°$, wherein the torch angles $\theta_L$ and $\theta_T$ refer to angles respectively formed between a horizontally disposed lower plate and the leading electrode and the lower plate and the trailing electrode.

The trailing electrode uses a flux-cored wire, and the carbon dioxide gas is used as the shielding gas for the trailing electrode. The method also includes setting a welding voltage $V_L$ of the leading electrode in a range from 26 to 38 V and a welding current $I_L$ of the leading electrode in a range from 350 to 550 A. In the method, the welding voltage $V_L$ in V and the welding current $I_L$ in A satisfy conditions represented in the following expression (1):

$$56 \leq \frac{V_L \cdot 10^3}{I_L} \leq 84 \qquad \text{expression (1)}$$

With the above-described method, the depth of penetration can be increased by setting the torch angle $\theta_L$ of the leading electrode in the following range: $5° \leq \theta_L < 40°$. Furthermore, a projecting bead shape formed by the leading electrode is corrected and a good bead shape is obtained by setting the torch angle $\theta_T$ of the trailing electrode in the following range: $40° \leq \theta_T \leq 60°$. Although the torch angles of the leading electrode and the trailing electrode are set to angles different from each other, by satisfying the welding conditions represented by the expression (1), the effect of arc welding performed by both the electrodes on a basin is balanced, thereby the basin is stabilized. Thus, production of spatter and the formation of undercut are suppressed, and a good bead shape can be obtained while the depth of penetration can be increased.

Preferably, the welding current $I_L$ in A, the welding voltage $V_L$ in V, a wire melting speed $W_{mL}$ in g/min, a wire diameter $R_L$ in mm, and a distance $E_L$ in mm between a tip and base metal of the leading electrode satisfy conditions represented by the following expressions (2) and (3):

$$5 \leq \frac{E_L}{R_L} \leq 20 \qquad \text{expression (2)}$$

$$38 \leq \frac{V_L^2 \cdot W_{mL} \cdot 10^3}{I_L^2 \cdot E_L} \leq 48 \qquad \text{expression (3)}$$

By satisfying the welding conditions represented by the expressions (2) and (3), the basin is further stabilized, and the depth of penetration can be further increased.

More preferably, the wire diameter $R_L$ in mm and the distance $E_L$ in mm between the tip and the base metal satisfy conditions represented by the following expression (2-2).

$$5 \leq \frac{E_L}{R_L} \leq 15 \qquad \text{expression (2-2)}$$

Thus, the basin is further stabilized, and the depth of penetration can be further increased.

Preferably, a distance $E_T$ between a tip and base metal of the trailing electrode is longer than a distance $E_L$ between a tip and the base metal of the leading electrode.

Thus, the quantity of weld deposition produced by the trailing electrode can be more preferably obtained, and a good bead shape can be obtained without the formation of undercut even with a high-speed welding.

Preferably, the torch angle $\theta_L$ of the leading electrode is in the following range: $5° \leq \theta_L \leq 25°$.

Thus, the depth of penetration can be more preferably increased by the leading electrode.

Preferably, a welding current $I_T$ in A, a welding voltage $V_T$ in V, a wire feed speed $W_{fT}$ in m/min, and a wire radius $r_T$ in mm of the trailing electrode satisfy conditions represented by the following expressions (4) and (5):

$$5.00 \leq \frac{I_T \cdot V_T \cdot 10^{-8}}{W_{fT} \cdot \pi r_T^2} \leq 7.00 \qquad \text{expression (4)}$$

$$\frac{I_T{}^2 \cdot 10^{-3}}{V_T} \le 5.00 \qquad \text{expression (5)}$$

Thus, production of spatter by the trailing electrode can be more preferably suppressed and a good bead shape can be obtained.

Preferably, in the flux-cored wire of the trailing electrode, the sum of a $TLO_2$ content and an $SiO_2$ content are 5.0 to 9.5% by mass of a total mass of the wire.

Both of $TiO_2$ and $SiO_2$ act as a slag forming agent. By setting the sum of $TiO_2$ and $SiO_2$ contents to equal to or more than 5.0% by mass, a sufficient amount of slag is obtained and a good slag detachability and a good encapsulating property can be obtained. Thus, degradation of the bead shape can be suppressed. By setting the sum of the $TiO_2$ and $SiO_2$ contents to equal to or less than 9.5% by mass, production of an excessive amount of slag can be avoided and the formation of undercut or overlap can be suppressed.

Furthermore, it is preferable that the flux-cored wire of the trailing electrode contain 4.5 to 9.0% $TiO_2$ by mass, 0.5 to 0.8% $SiO_2$ by mass, 0.02 to 0.09% C by mass, 0.3 to 0.75% Si by mass, and 2.0 to 3.0% Mn by mass of the total mass of the wire.

By setting the $TiO_2$ content to 4.5 to 9.0% by mass, a good slag detachability and a good encapsulating property can be obtained, production of an excessive amount of slag can be avoided, and the formation of undercut or overlap can be suppressed.

By setting the $SiO_2$ content to 0.5 to 0.8% by mass, a good slag fluidity can be obtained, degradation of the bead shape can be suppressed, the bead is prevented from excessively easily sagging, and an increase in the spatter production amount is suppressed. Thus, reduction in welding efficiency can be prevented.

By setting the C content to 0.02 to 0.09% by mass, a sufficient strength of weld metal can be obtained, reduction in toughness at low temperature due to an excessive increase in the strength of weld metal can be suppressed, and an increase in the spatter production amount can be suppressed.

Si acts as a deoxidizer, adjusts the strength of weld metal, and improves the viscosity of molten metal. By setting the Si content to 0.3 to 0.75% by mass, a sufficient strength of weld metal can be obtained, degradation in the bead shape can be suppressed, and reduction in toughness at low temperature due to an excessive increase in the strength of weld metal can be suppressed.

Mn acts as a deoxidizer and improves the strength of the weld metal and the toughness at low temperature of the weld metal. By setting the Mn content to 2.0 to 3.0% by mass, the above-described effects can be sufficiently produced, and cold crack, which is caused by reduction in toughness at low temperature due to an excessive increase in the strength of weld metal, can be suppressed.

With the tandem gas-shielded arc welding method according to the present invention, the welding conditions of the leading electrode are adjusted. By doing this, horizontal fillet welding can be performed, in which a 100% carbon dioxide gas is used as the shielding gas for both the electrodes and the torch angles of the leading electrode and the trailing electrode are set to angles different from each other. In the welding, production of spatter and the formation of undercut are suppressed, and a good bead shape can be maintained while the depth of penetration can be increased.

Furthermore, with the tandem gas-shielded arc welding method according to the present invention, horizontal fillet welding can be performed with the depth of penetration more preferably increased by limiting the welding conditions to narrower ranges.

BRIEF DESCRIPTION OF THE DRAWINGS

Figs. 1A, 1B, and 1C are respectively a general front view, a general plan view, and a general side view schematically illustrating a tandem gas-shielded arc welding method according to an embodiment of the present invention;

Fig. 2A and 2B are respectively schematic sectional views of a leading electrode and a trailing electrode seen from a side illustrating the relationship between positions of electrodes and penetration and a bead shape in the tandem gas-shielded arc welding method according to the embodiment of the present invention;

Figs. 3A to 3C are sectional photomacrograph images of examples of penetration in a weld area, in which Fig. 3A illustrates a case where a bead projects, Fig. 3B illustrates a case where a bead is flattened, and Fig. 3C illustrates a case where undercut is formed;

Figs. 4A to 4C are sectional photomacrograph images of weld areas formed by using horizontal fillet welding, in which weld areas illustrated in Figs. 4A and 4B are formed by using welding methods according first and second related-art methods, respectively, and a weld area illustrated in Fig. 4C is formed by using a welding method according a present invention method;

Figs. 5A to 5C are schematic side views of states of penetration in the tandem gas-shielded arc welding, in which Fig. 5A illustrates a shallow penetration, Fig. 5B illustrates a deep penetration, and Fig. 5C is for explaining a method of evaluating penetration and the bead shape; and

Fig. 6 is a graph illustrating the relationship between a welding speed and the incidence of spattering in the present invention method and the first related-art method.

DESCRIPTION OF THE PREFERRED EMBODIMENTS

A tandem gas-shielded arc welding method according to an embodiment of the present invention will be described in detail below with reference to the drawings. The shapes and sizes of components may be exaggerated in the drawings and some structures may be omitted from the drawings for convenience of description. Also, in the following description, the tandem gas-shielded arc welding may be referred to as "tandem welding" for short, a related-art tandem gas-shielded arc welding method may be referred to as a "related-art method" for short, and the tandem gas-shielded arc welding method according to the present invention may be referred to as a "present invention method" for short.

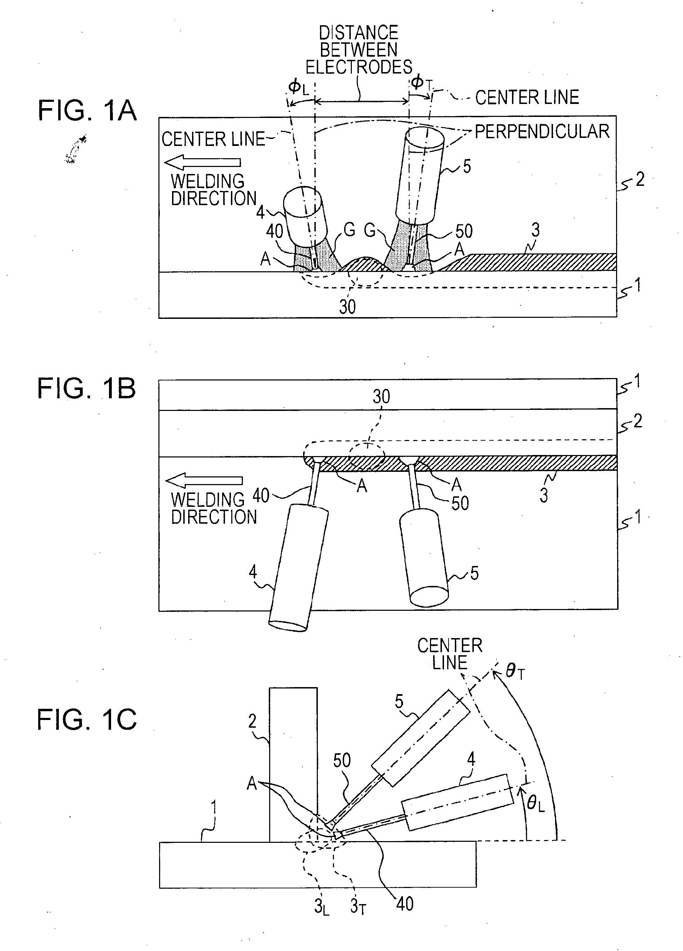

Referring to Figs. 1A to 2B, the tandem gas-shielded arc welding method according to the present invention is initially described.

In the tandem gas-shielded arc welding method, welding is performed with two electrodes, that is, a leading electrode 4 and a trailing electrode 5 while a shielding gas G is injected to a weld area. As described above, in the related-art tandem welding method, both the leading electrode 4 and the trailing electrode 5 are disposed at the torch angles, which are the same as each other in a range from 40 to 60°. Here, as illustrated in Fig. 1C, the torch angles refer to angles $\theta_L$ and $\theta_T$ respectively formed between a horizontally disposed lower plate 1 and the leading electrode 4 and the lower plate 1 and the trailing electrode 5.

As illustrated in Fig. 1C, in the tandem welding method according to the present invention, the torch angle $\theta_L$ of the leading electrode 4 is set to be smaller than the torch angle $\theta_T$ of the trailing electrode 5, the shielding gas G for the leading electrode 4 (see Fig. 1A) and the shielding gas G for the trailing electrode 5 are both a 100% carbon dioxide gas, a wire 40 of the leading electrode 4 uses a solid wire, and a wire 50 of the trailing electrode 5 uses a flux-cored wire. In order to maintain a good bead shape, avoid the formation of undercut, increase the depth of penetration, and reduce spatter under these conditions, parameters of the leading electrode 4 are set so as to be in specified relationships. The details of the specified relationships among the parameters will be described later.

The wire 40 of the leading electrode 4 uses a low-cost solid wire that does not include high-cost elements such as rare earth elements. The shielding gas G uses a 100% carbon dioxide gas that does not include inactive gases such as a high-cost argon gas. In Figs. 1B and 1C, illustration of the shielding gas G is omitted.

The torch angle $\theta_L$ is an angle formed between a center line of the leading electrode 4 (a center line of a portion between a tip and base metal as a distal end portion of the wire 40) and an upper surface of the horizontally disposed lower plate 1. By setting the torch angle $\theta_L$ to smaller than 40° and equal to or greater than 5°, the depth of penetration in a thickness direction of a vertical plate 2 is increased. Although an inclination angle $\phi_L$ of the leading electrode 4 relative to a welding direction (that is, an angle formed between the center line of the leading electrode 4 and a plane having the normal in the welding direction) is not particularly limited, it is preferable that the inclination angle be set as a backward angle of 0 to 15° with consideration of the spatter production amount and the bead shape.

Since the plane having the normal in the welding direction is a plane perpendicular to the upper surface of the lower plate 1, in Fig. 1A, a line perpendicular to the upper surface of the lower plate 1 is illustrated instead of the plane having the normal in the welding direction. This is similarly applicable to description of the trailing electrode 5 described below.

The wire 50 of the trailing electrode 5 uses a flux-cored wire, and a 100% carbon dioxide gas is used as the shielding gas G for the trailing electrode 5.

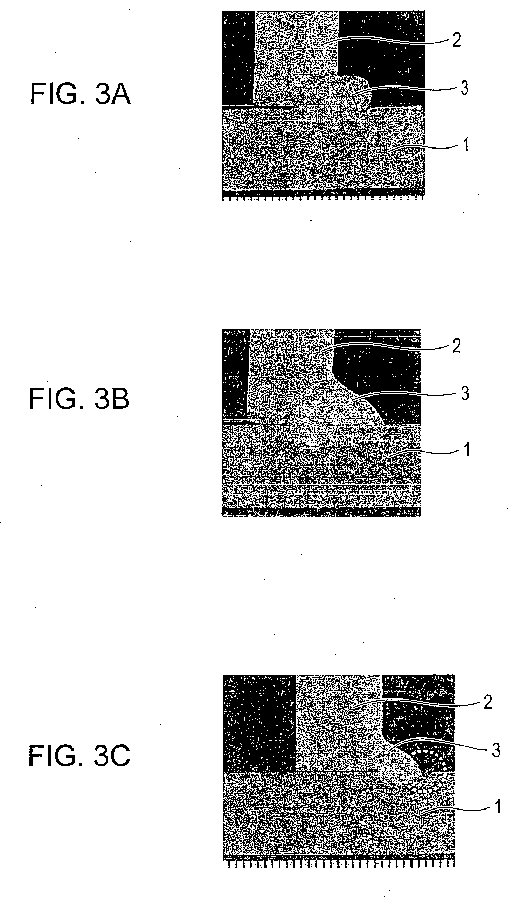

The torch angle $\theta_T$ is an angle formed between a center line of the trailing electrode 5 (a center line of a portion between a tip and the base metal as a distal end portion of the wire 50) and the upper surface of the lower plate 1. By setting the torch angle $\theta_T$ to 40 to 60°, and more preferably, to 40 to 50°, a projecting bead (see Fig. 3A) formed by the leading electrode 4 is flattened so that a good bead shape (see Fig. 3B) is formed. Although an inclination angle $\phi_T$ of the trailing electrode 5 relative to the welding direction (that is, an angle formed between the center line of the trailing electrode 5 and a plane having the normal in the welding direction) is not particularly limited, it is preferable that the inclination angle be set as a forward angle of 0 to 25° with consideration of the spatter production amount and the bead shape.

Although the distance between the electrodes, which is the distance between the distal end of the wire 40 of the leading electrode 4 and the distal end of the wire 50 of the trailing electrode 5, is not particularly limited, it is preferable that the distance between the electrodes be set from 20 to 60 mm with consideration of stability of arcs A produced by both the electrodes and stability of a basin 30.

Each of the leading electrode 4 and the trailing electrode 5 is connected to a power source for welding (not shown), thereby power is supplied at a specified welding voltage and current between base materials, that is, the lower plate 1 and the vertical plate 2 and the leading and trailing electrodes 4 and 5. Thus, the arcs A are produced between the wires 40 and 50 of the electrodes and the upper and lower plates 1 and 2. The polarity of power supplied to the leading electrode 4 and the trailing electrode 5 is a reverse polarity for both the electrodes (the leading electrode 4 and the trailing electrode 5 are connected to the anode of the power source, and the lower plate 1 and the vertical plate 2 as the base materials are connected to the cathode of the power source).

The lower plate 1 and the vertical plate 2 as the base materials are melted by the arcs A and fused to deposited metal, which is the melted wires 40 and 50. Thus, the weld area is formed. The wires 40 and 50 are melted by joule heat generated by welding currents that flow therethrough in addition to arc heat of arcs A.

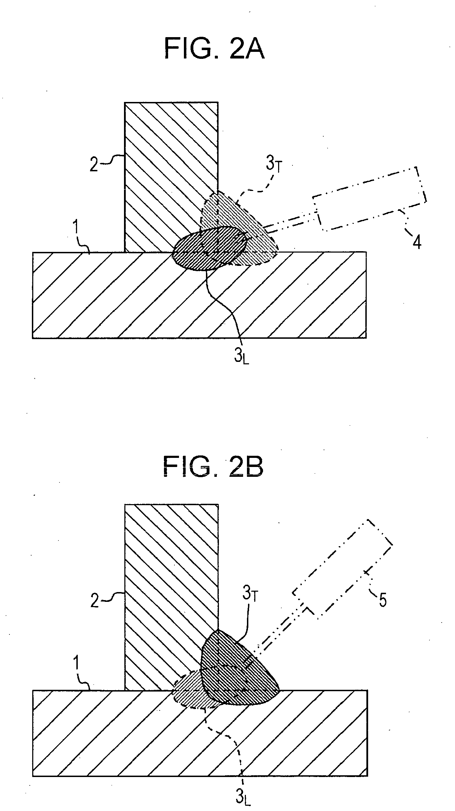

Here, contribution of the leading electrode 4 and the trailing electrode 5 to penetration and the bead shape is described with reference to Figs. 2A and 2B.

In the tandem welding according to the present invention, as illustrated in Fig. 2A, the leading electrode 4, the torch angle of which is set to a small angle, significantly contributes to deep penetration in the thickness direction of the vertical plate 2 (horizontal direction). A bead $3_L$ formed by the leading electrode 4 tends to become a projecting bead. Fig. 3A illustrates an example of a sectional photomacrograph image of a projecting bead.

As illustrated in Fig. 2B, the bead $3_L$ having a projecting shape formed by the leading electrode 4 is flattened by the trailing electrode 5 to have a good bead shape. Fig. 3B illustrates an example of a sectional photomacrograph image a flattened bead.

That is, the leading electrode 4 and the trailing electrode 5 are used to perform different tasks as follows: the leading electrode 4 significantly contributes to deep penetration and the trailing electrode 5 significantly contributes to the formation of a good bead shape.

Next, the relationships among specified parameters are described along with a process of consideration that leads to the present invention.

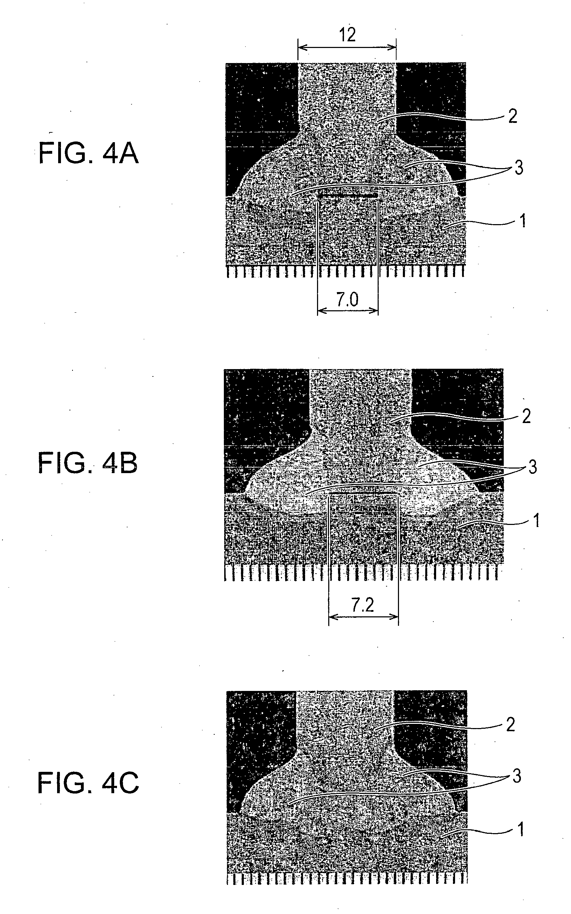

Assuming that horizontal double-sided fillet welding is performed on 12 mm thick plate with related-art tandem welding methods, that is, (a) a tandem pulse metal active gas (MAG) method and (b) a tandem $CO_2$ welding method. Here, an Ar-$CO_2$ gas mixture and a solid wire are used in the tandem pulse MAG method, and a 100% $CO_2$ gas and a flux-cored wire are used in the tandem $CO_2$ welding method. As a result, as illustrated in Figs. 4A and 4B, total penetration in the horizontal direction is about 4 to 5 mm and an about 7 mm region, which is more than a half of the total thickness of the plate, is not penetrated. Referring to Figs. 4A and 4B, the vertical plate 2, which is one of the base material, is perpendicularly disposed on the upper surface of the lower plate 1, which is the other base material and horizontally disposed. Beads 3 are formed by fillet welding performed from both sides of the vertical plate 2 under the same conditions. In each of Figs. 4A and 4B, the region not penetrated is a portion with black streaks in a horizontal direction between the beads 3 formed on both sides of the vertical plate 2.

Accordingly, in order to obtain a static strength of a fillet joint portion in the related-art tandem welding methods, the throat thickness (foot length) needs to be equal to or more than a specified value. Thus, despite use of the tandem welding method, an effect of increasing operational speed, which is the original effect to be achieved by tandem welding, cannot be sufficiently achieved.

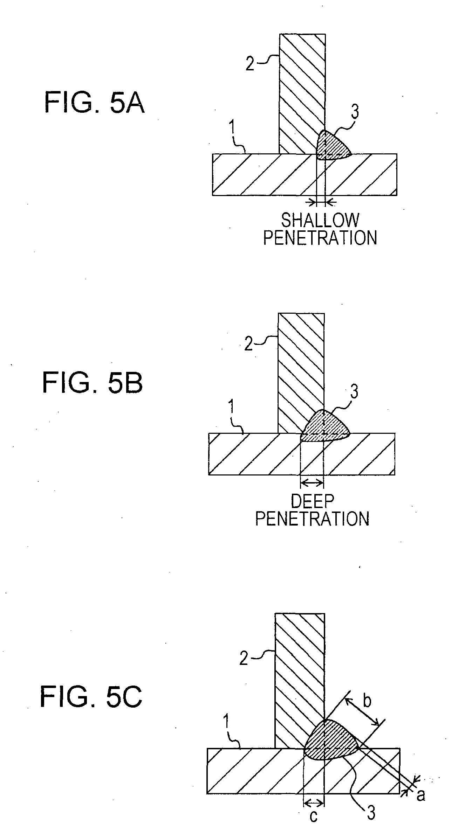

In horizontal fillet welding, unless otherwise specified, deep or shallow penetration (increase or decrease the depth of penetration) refers to the depth of penetration in the horizontal direction, that is, in the thickness direction of the vertical plate 2. For example, Fig. 5A illustrates a case in which penetration of bead 3 in the horizontal direction is shallow, and Fig. 5B illustrates a case in which penetration of bead 3 in the horizontal direction is deep.

Conditions of Leading Electrode

In the tandem welding method, two electrodes perform respective different tasks, that is, the depth of penetration is obtained by the leading electrode 4 and the bead shape is corrected by the trailing electrode 5. Thus, in order to increase the depth of penetration, welding conditions of the leading electrode 4 need to be studied.

In horizontal fillet welding, in order to increase the depth of penetration in the related-art tandem welding method, it is effective to reduce the torch angle $\theta_L$ of the leading electrode 4. However, when the torch angle $\theta_L$ or $\theta_T$ is reduced, as described in Japanese Unexamined Patent Application Publication No. 2004-261839, undercut is formed in the lower plate 1. Fig. 3C illustrates an example of a sectional photomacrograph image of a weld area in which an undercut (see inside the dotted circle) is formed when the torch angles $\theta_L$ and $\theta_T$ are set to 20°.

In order to prevent the formation of the undercut, the torch angle $\theta_T$ of the trailing electrode 5 needs to be increased. However, in the tandem welding method, when welding with the torch angles $\theta_L$ and $\theta_T$ of both the electrodes set to angles different from each other, directions of arc forces acting on the basin 30, which is a rise portion formed of molten metal between both the electrodes, becomes unbalanced. Accordingly, the basin 30 is very unlikely to stabilize, and as a result, the bead shape is degraded. Thus, in the related-art tandem welding method, there is no choice but to perform welding by setting the torch angles $\theta_L$ and $\theta_T$ of both the electrodes to the same angle in a range from 40 to 60°.

Here, in order to increase the depth of penetration and form good bead in the horizontal fillet tandem welding while no undercut is formed and little spatter is produced, the following points are very important:

(1) the depth of penetration is increased while the stable basin 30 is formed,
(2) even with the shielding gas G is a 100% carbon dioxide gas, welding can be performed with a small amount of spatter being produced, and
(3) the torch angle $\theta_L$ is reduced and no undercut is formed even performing welding at high current.

In general, in welding performed with a 100% carbon dioxide gas, since an arc is produced under a droplet formed at a distal end of a melted wire, it is difficult for the droplet to be removed from the wire, thereby increasing the size of the droplet. Thus, the molten metal is globular transfer, in which the molten metal is transferred while being swung, occurs. When globular transfer occurs, a large amount of spatter is produced, and the welding current $I_L$ significantly fluctuates in accordance with the transfer of droplet. Thus, the arc force frequently changes and the basin is not stabilized. When the torch angle $\theta_L$ is equal to or less than 40°, performing welding under general welding conditions, under which globular transfer is likely to occur, undercut is also formed.

In order to address this, in the present invention, it was found that, when the ratio of a welding voltage $V_L$ (in V) to the welding current $I_L$ (in A) fall within a range represented by an expression (1), a welding operation can be performed, in which the depth of penetration is increased, a small amount of spatter is produced, the basin is stabilized, and no undercut is formed even with a high current and a decreased torch angle $\theta_L$. That is, by satisfying the expression (1), the arc can be produced not under the droplet but around the droplet so as to wrap the droplet, thereby realizing spray transfer even in 100% carbon dioxide gas welding and realizing welding with very little spatter.

$$56 \le \frac{V_L \cdot 10^3}{I_L} \le 84 \qquad \text{expression (1)}$$

Next, meaning of the upper and lower limits of the value, "$V_L \cdot 10^3 / I_L$", in the expression (1) is described.

The relationships between the parameters in the expression (1) and welding characteristics are as follows.

(a1) When the welding voltage $V_L$ is excessively high, spray transfer cannot be maintained and globular transfer occurs, thereby a large amount of spatter is produced. Also, undercut is likely to occur.
(a2) When the welding current $I_L$ is excessively low, the arc force of the leading electrode 4 becomes weak, and accordingly, the depth of penetration is reduced.

Thus, by setting the value of "$V_L \cdot 10^3 / I_L$" to equal to or less than 84, spray transfer is maintained to reduce spatter, the formation of undercut is suppressed, the basin 30 is stabilized, and a good bead shape is maintained while the depth of penetration can be increased.

There also are the following relationships between the parameters in the expression (1) and welding characteristics.

(b1) When the welding voltage $V_L$ is excessively low, the basin 30 becomes unstable and the bead shape is degraded.
(b2) When the welding current $I_L$ is excessively high, the arc force of the leading electrode 4 becomes excessively strong and the basin 30 becomes unstable.

Thus, by setting the value of "$V_L \cdot 10^3 / I_L$" in the expression (1) to equal to or more than 56, the basin 30 is stabilized and a good bead shape is maintained, while the depth of penetration can be increased.

Next, the inventors of the present invention found more preferable conditions than the expression (1). Those are the new relationships among parameters including parameters other than the welding current $I_L$ and the welding voltage $V_L$ affecting penetration and the stability of the basin 30. First, the inventors focused attention on the relationship between the wire diameter $R_L$ and the distance $E_L$ between the tip and the base metal as parameters that affect both the welding current $I_L$ and a wire melting speed $W_{mL}$.

Here, the distance $E_L$ between the tip and the base metal refers to a length between a contact tip (not shown) at a distal end portion of the leading electrode 4 and the base material. The contact tip is used to supply current to the wire 40.

How the wire diameter $R_L$ and the distance $E_L$ between the tip and the base metal affect the welding current $I_L$ and the wire melting speed $W_{mL}$ is described below.

For example, assuming that the welding current $I_L$ is fixed, as the wire diameter $R_L$ increases and the distance $E_L$ between the tip and the base metal decreases, the wire melting speed $W_{mL}$ decreases and an increase in penetration is facilitated.

However, in the case where the wire diameter $R_L$ is excessively large or the distance $E_L$ between the tip and the base metal is excessively short, the welding current $I_L$ becomes excessively high. This causes the basin 30 to be unstable and the bead shape to be degraded.

Thus, it was found that, in order to increase the depth of penetration and stabilize the basin 30, the relationship between the distance $E_L$ between the tip and the base metal and the wire diameter $R_L$ needs to satisfy the conditions in an expression (2).

$$5 \leq \frac{E_L}{R_L} \leq 20 \qquad \text{expression (2)}$$

It was also found that, in addition to satisfying the conditions in the expression (2), when the product of the square of the welding voltage $V_L$ and the ratio between the entire wire melting speed $W_{mL}$ and the wire melting speed attributable to joule heat falls within a range represented by an expression (3), a welding operation can be performed, in which the depth of penetration is increased, a small amount of spatter is produced, the basin is stabilized, and no undercut is formed even with a high current and a decreased torch angle $\theta_L$. By satisfying the expression (3), the arc can be formed not under the droplet but around the droplet so as to wrap the droplet, thereby realizing spray transfer even in 100% carbon dioxide gas welding and realizing welding with a very small amount of spatter. Also by satisfying the expression (3), the energy density of the arc of the leading electrode can be significantly reduced compared to that under general welding conditions. Thus, even at a reduced torch angle $\theta_L$, excessive digging of the base material caused by the arc can be suppressed, and accordingly, no undercut is formed. Furthermore, by realizing spray transfer, fluctuation of the welding current $I_L$ is significantly reduced, and accordingly, the basin 30 is stabilized.

That is, it was found that, by satisfying conditions in the expressions (2) and (3), a welding operation can be performed, in which a smaller amount of spatter is produced, no undercut is formed, the bead has a good shape, and the depth of penetration is increased.

$$38 \leq \frac{V_L^2 \cdot W_{mL} \cdot 10^3}{I_L^2 \cdot E_L} \leq 48 \qquad \text{expression (3)}$$

Regarding the units of the parameters in the expression (3), the welding current $I_L$ is in A, the welding voltage $V_L$ is in V, the wire melting speed $W_{mL}$ is in g/min, the wire diameter $R_L$ is in mm, and the distance $E_L$ between the tip and the base metal is in mm.

Next, meaning of the upper and lower limits of the value of "$E_L/R_L$" in the expression (2) is described.

The relationships between the parameters in the expression (2) and welding characteristics are as follows.

(c1) When the distance $E_L$ between the tip and the base metal is excessively long, the wire melting speed $W_{mL}$ becomes excessively high, the basin 30 becomes unstable, and the depth of penetration is reduced.

(c2) When the wire melting speed $W_{mL}$ is fixed, the welding current $I_L$ decreases as the wire diameter $R_L$ decreases. Thus, when the wire diameter $R_L$ is excessively small, the arc force is reduced due to a reduction in the welding current $I_L$. This is disadvantageous to increase the depth of penetration.

Thus, by setting the value of "$E_L/R_L$" to equal to or less than 20, and more preferably, set to equal to or less than 15, the basin 30 can be stabilized and the depth of penetration can be increased.

There also are the following relationships between the parameters in the expression (2) and welding characteristics.

(d1) When the distance $E_L$ between the tip and the base metal is excessively short, the arc force of the leading electrode 4 becomes excessively strong. This causes the basin 30 to be unstable and the bead shape to be degraded.

(d2) When the wire diameter $R_L$ is excessively large, the welding current $I_L$ becomes excessively high. This causes the basin 30 to be unstable and the bead shape to be degraded.

Thus, by setting the value of "$E_L/R_L$" to equal to or more than 5, the depth of penetration can be increased while the stability of the basin 30 can be obtained.

Next, meaning of the upper and lower limits of the expression (3) is described.

Here, it is assumed that the expression (2) is satisfied.

The relationships between the parameters in the expression (3) and welding characteristics are as follows.

(e1) When the welding voltage $V_L$ is excessively high, spray transfer cannot be maintained and globular transfer occurs, thereby a large amount of spatter is produced. Also, undercut is likely to occur.

(e2) When the wire melting speed $W_{mL}$ is excessively high, the basin 30 becomes unstable and the depth of penetration is reduced.

(e3) When the welding current $I_L$ is excessively low, the arc force of the leading electrode 4 becomes weak, and accordingly, the depth of penetration is reduced.

(e4) When the distance $E_L$ between the tip and the base metal is excessively short, an arc is produced between the wire 40 and the lower plate 1 in the case where the torch angle $\theta_L$ is small. This causes welding to be unstable.

(e5) When the value of "$W_{mL}/(I_L^2 \cdot E_L)$" is excessively small, the welding current $I_L$ becomes excessively high and the undercut is likely to be formed.

Thus, by setting the value of "$(V_L^2 \cdot W_{mL} \cdot 10^3)/(I_L^2 \cdot E_L)$" in the expression (3) to equal to or less than 48, spray transfer is maintained to reduce spatter, the formation of undercut is suppressed, the basin 30 is stabilized, and a good bead shape is maintained while the depth of penetration can be increased.

There also are the following relationships between the parameters in the expression (3) and welding characteristics.

(f1) When the welding voltage $V_L$ is excessively low, the basin 30 becomes unstable and the bead shape is degraded.

(f2) When the wire melting speed $W_{mL}$ is excessively low, the basin 30 becomes unbalanced and the bead shape is degraded.

(f3) When the welding current $I_L$ is excessively high, the arc force of the leading electrode 4 becomes excessively strong and the basin 30 becomes unstable.

(f4) When the distance $E_L$ between the tip and the base metal is excessively long, the wire melting speed $W_{mL}$ becomes excessively high, the basin 30 becomes unstable, and the depth of penetration is reduced.

(f5) When "$W_{mL}/(I_L^2 \cdot E_L)$ is excessively large, the welding current $I_L$ is reduced and the depth of penetration is reduced.

Thus, by setting the value of "$(V_L^2 \cdot W_{mL} \cdot 10^3)/(I_L^2 \cdot E_L)$" in the expression (3) to equal to or more than 38, the basin 30 is stabilized and a good bead shape is maintained while the depth of penetration can be increased.

By setting the welding conditions of the leading electrode 4 with consideration of effects of the parameters of the leading electrode 4 on welding and satisfying the expressions (2) and (3) as described above, spray transfer can be realized, and accordingly, spatter can be reduced even when the wire 40 uses a solid wire and the shielding gas G uses a 100% carbon dioxide gas. Furthermore, even when the torch angle $\theta_L$ is smaller than 40° and the welding current $I_L$ is a high current, undercut is not formed and a good bead shape can be obtained.

Conditions of Trailing Electrode

By satisfying the conditions in the expression (1), which defines the welding conditions of the leading electrode 4, and preferably also satisfying the conditions in the expressions (2) and (3), an effect is produced, by which the depth of penetration is increased and spatter produced from the leading electrode 4 is significantly reduced. However, in the tandem gas-shielded arc welding method, in order to further improve the bead shape and further reduce spatter, it is preferable that the welding conditions of the trailing electrode 5 be appropriately set.

Accordingly, in addition to the setting of the welding conditions of the leading electrode 4 as described above, in the present embodiment, welding conditions of the trailing electrode 5 are set so that a welding current $I_T$ (in A), a welding voltage $V_T$ (in V), a wire feed speed $W_{fT}$ (in g/min), and a wire radius $r_T$ (in mm) of the trailing electrode 5 satisfy the relationships represented by expressions (4) and (5). With this setting, the arc length of the trailing electrode 5 can be appropriately maintained, thereby allowing the bead shape to be more preferably corrected and the spatter to be reduced.

$$5.00 \le \frac{I_T \cdot V_T \cdot 10^{-8}}{W_{fT} \cdot \pi\, r_T^{\,2}} \le 7.00 \qquad \text{expression (4)}$$

$$\frac{I_T^{\,2} \cdot 10^{-3}}{V_T} \le 5.00 \qquad \text{expression (5)}$$

Here, meaning of the upper and lower limits of the expression (4) and the upper limit of the expression (5) is described.

When the value of "$(I_T \cdot V_T \cdot 10^{-8})/(W_{fT} \cdot \pi r_T^2)$" in the expression (4) exceeds 7, it is impossible to reduce spatter or obtain a good bead shape. That is, when the welding current $I_T$ is excessively high, the arc force of the arc A produced by the trailing electrode 5 becomes excessively high. This causes the basin 30 formed between two electrodes to be unstable. Thus, a proper bead shape cannot be obtained. Furthermore, when the welding voltage $V_T$ is excessively high, the arc length becomes excessively long, a large amount of spatter is produced, and undercut is likely to be formed.

Also when the value of "$(I_T \cdot V_T \cdot 10^{-8})/(W_{fT} \cdot \pi r_T^2)$" in the expression (4) is less than 5, it is impossible to reduce spatter or obtain a good bead shape. That is, when the welding current $I_T$ is excessively low, a sufficient electromagnetic pinch force for the arc A cannot be obtained, and accordingly, spatter produced by the trailing electrode 5 increases. Furthermore, since the arc force of the arc A formed by the trailing electrode 5 is excessively low, a molten pool formed by the leading electrode 4 cannot be sufficiently enlarged. This causes an uncorrected bead shape.

When the welding voltage $V_T$ is excessively low, the arc length is excessively short, thereby forming a short circuit. As a result, a large amount of spatter is produced, and it is impossible for the bead shape to be sufficiently corrected.

Furthermore, as represented in the expression (5), the upper limit of the value of "$I_T^2 \cdot 10^{-3}/V_T$" is set to 5. When the welding current $I_T$ becomes excessively high as a case in which this value exceeds 5, the basin 30 is unlikely to be stable and the bead shape is degraded. When the welding voltage $V_T$ is excessively low, the bead shape having been formed to have a projecting shape by the leading electrode 4 cannot be sufficiently corrected.

Composition of trailing Electrode Wire

In the flux-cored wire of the trailing electrode 5, the sum of a $TiO_2$ content and an $SiO_2$ content are preferably 5.0 to 9.5% by mass of the total mass of the wire.

Both of $TiO_2$ and $SiO_2$ act as a slag forming agent. By setting the sum of $TiO_2$ and $SiO_2$ content to equal to or more than 5.0% by mass, a sufficient amount of slag is produced and a good slag detachability and a good encapsulating property can be obtained. Thus, degradation of the bead shape can be suppressed. By setting the sum of the $TiO_2$ and $SiO_2$ contents to equal to or less than 9.5% by mass, production of an excessive amount of slag can be avoided and the formation of undercut or overlap can be suppressed.

Furthermore, it is preferable that the flux-cored wire of the trailing electrode 5 contain 4.5 to 9.0% $TiO_2$ by mass, 0.5 to 0.8% $SiO_2$ by mass, 0.02 to 0.09% C by mass, 0.3 to 0.75% Si by mass, and 2.0 to 3.0% Mn by mass of the total mass of the wire.

By setting the $TiO_2$ content to equal to or more than 4.5% by mass, a good slag detachability and a good encapsulating property can be obtained. By setting the $TiO_2$ content to equal to or less than 9.0% by mass, production of an excessive amount of slag can be avoided and the formation of undercut or overlap can be suppressed.

By setting the $SiO_2$ content to equal to or more than 0.5% by mass, a good slag fluidity can be obtained and degradation of the bead shape can be suppressed. By setting the $SiO_2$ content to equal to or less than 0.8% by mass, the bead is prevented from excessively easily sagging and an increase in the spatter production amount is suppressed. Thus, reduction in welding efficiency can be prevented.

C is an element that is preferably added so as to increase the strength of weld metal. By setting the C content to equal to or more than 0.02% by mass, a sufficient strength of weld metal can be obtained. By setting the C content to equal to or less than 0.09% by mass, reduction in toughness at low temperature due to an excessive increase in the strength of weld metal can be suppressed, and an increase in the spatter production amount can be suppressed.

Si acts as a deoxidizer, adjusts the strength of weld metal, and improves the viscosity of molten metal. By setting the Si content equal to or more than 0.3% by mass, a sufficient strength of weld metal can be obtained and degradation of the bead shape can be suppressed. By setting the Si content to equal to or less than 0.75% by mass, reduction in toughness at low temperature due to an excessive increase in the strength of weld metal can be suppressed.

Mn acts as a deoxidizer and improves the strength and the toughness at low temperature of the weld metal. By setting the Mn content equal to or more than 2.0% by mass, the above-described effect can be sufficiently obtained. By setting the Mn content to equal to or less than 3.0% by mass, cold crack, which might otherwise be easily caused by reduction in toughness at low temperature due to an excessive increase in the strength of weld metal, can be suppressed.

Examples

Next, the tandem gas-shielded arc welding method according to the embodiment of the present invention is described by comparing examples that satisfy the requirements of the present invention with comparative examples that do not satisfy the requirements of the present invention.

First and Second Experiments

As a first experiment, horizontal fillet welding is initially performed on one side of the vertical plate 2 of 12 mm thick base materials (lower plate 1 and vertical plate 2). In the first experiment, welding conditions are varied so that, for some of the samples, the calculated values of the expressions (1), (2), and (3) satisfy the requirements of the present invention, and, for the other samples, the calculated values of the expressions (1), (2), and (3) do not satisfy the requirements of the present invention. The welding conditions are varied by changing the following parameters of the leading electrode 4: wire feed speed $W_{fL}$ (in m/min), wire melting speed $W_{mL}$ (in g/min), wire diameter $R_L$ (in mm), distance $E_L$ (in mm) between the tip and the base metal, welding current $I_L$ (in A), and welding voltage $V_L$ (in V). The foot length is unchanged through the samples of the first experiment, and penetration (in mm), the spatter production amount (in g/min), the bead shape, and undercut are evaluated.

The wire melting speed $W_{mL}$ is calculated by multiplying the wire feed speed $W_{fL}$ by the mass per unit length calculated from the wire diameter $R_L$ and the density of the wire. Furthermore, as illustrated in Fig. 5C, the evaluation index of penetration is a penetration depth c in the thickness direction (horizontal direction) of the vertical plate 2. The evaluation index of the bead shape is the ratio a/b, where, as illustrated in Fig. 5C, b is the distance between the toes of weld of the bead 3 and a is the distance between a line connecting the toes of weld and a distal end of the projecting portion of the bead 3. The evaluation index (a/b) of the bead shape is an evaluation index that indicates the degree of the projecting bead. As the a/b increases, the bead shape is significantly projecting. Thus, as the evaluation index (a/b) decreases, the bead shape is improved.

In the first experiment, in every sample, the following parameters of the trailing electrode 5 are set so as to satisfy the expressions (4) and (5): wire feed speed $W_{fT}$ (in m/min), wire diameter $R_T$ (in mm), welding current $I_T$ (in A), and welding voltage $V_T$ (in V). The welding speed is 100 cm/min, the distance between the electrodes (see Fig. 1A) is 35 mm, the distance $E_T$ between a tip and the base metal of the trailing electrode 5 is 25 mm, the leading electrode 4 uses a solid wire as the wire 40, and the trailing electrode 5 uses a flux-cored wire as the wire 50. The shielding gas G for the leading electrode 4 and the trailing electrode 5 is a 100% carbon dioxide gas. In each sample, the wire diameters $R_L$ and $R_T$ of the leading electrode 4 and the trailing electrode 5 are the same as each other.

As a second experiment, horizontal fillet welding is performed on one side of the 12 mm thick vertical plate 2. In the second experiment, welding conditions are varied so that, for some of the samples, the calculated values of the expressions (4) and (5) satisfy the requirements of the present invention and, for the other samples, the calculated values of the expressions (4) and (5) do not satisfy the requirements of the present invention. The welding conditions are varied by changing the following parameters of the trailing electrode 5: wire feed speed $W_{fT}$ (in m/min), wire diameter $R_T$ (in mm), welding current $I_T$ (in A), and welding voltage $V_T$ (in V). The foot length is unchanged through the samples of the second experiment, and penetration (in mm), the spatter production amount (in g/min), the bead shape, and undercut are evaluated. Also, general evaluation is made in accordance with the four evaluation indices.

In the second experiment, in every sample, the following parameters of the leading electrode 4 are set so as to satisfy the expressions (1), (2), and (3): wire feed speed $W_{fL}$ (in m/min), wire melting speed $W_{mL}$ (in g/min), wire diameter $R_L$ (in mm), distance $E_L$ (in mm) between the tip and the base metal, welding current $I_L$ (in A), and welding voltage $V_L$ (in V). The distance between the electrodes is the same as that of the first experiment.

The results of the first experiment are shown in Tables 1 to 3, and the results of the second experiment are shown in Table 4. In each table, the results are written in order from the leftmost column as follows: sample No.; items related to the leading electrode 4, that is, wire feed speed $W_{fL}$ (in m/min), wire melting speed $W_{mL}$ (in g/min), wire diameter $R_L$ (in mm), distance $E_L$ (in mm) between the tip and the base metal, welding current $I_L$ (in A), welding voltage $V_L$ (in V), and calculated values of the expressions (1), (2) and (3); items related to the trailing electrode 5, that is, wire feed speed $W_{fT}$ (in m/min), wire diameter $R_T$ (in mm), welding current $I_T$ (in A), welding voltage $V_T$ (in V), and calculated values of the expressions (4) and (5); and evaluation results: penetration (in mm), spatter production amount (in g/min), bead shape (a/b), undercut, and general evaluation.

Table 1

| No. | Leading electrode | | | | | | | | | Trailing electrode | | | | | | Evaluation | | | | |
|---|---|---|---|---|---|---|---|---|---|---|---|---|---|---|---|---|---|---|---|---|
| | Wire feed speed (in m/min) | Wire melting speed (in g/min) | Wire diameter (in mm) | B/w tip & metal (in mm) | Welding current (in A) | Welding voltage (in V) | Expression (1) Calculated value | Expression (2) Calculated value | Expression (3) Calculated value | Wire feed speed (in m/min) | Wire diameter (in mm) | Welding current (in A) | Welding voltage (in V) | Expression (4) Calculated value | Expression (5) Calculated value | Penetration (in mm) | Spatter (in g/min) | Bead shape | Undercut | General evaluation |
| 1 | 15.3 | 130.1 | 1.2 | 5.0 | 450 | 21.2 | **47.1** | **4.2** | **57.7** | 14 | 1.2 | 272 | 29.7 | 5.10 | 2.49 | 6.2 | **4.23** | **0.21** | C | C |
| 2 | 18.4 | 156.4 | 1.2 | 10.0 | 459 | 25.6 | **55.8** | 8.3 | **48.7** | 14 | 1.2 | 272 | 29.9 | 5.14 | 2.47 | 6.2 | **4.30** | **0.26** | C | C |
| 3 | 20.3 | 172.6 | 1.2 | 15.0 | 451 | 24.4 | **54.1** | 12.5 | **33.7** | 14 | 1.2 | 270 | 29.5 | 5.03 | 2.47 | 5.6 | **5.30** | **0.28** | C | C |
| 4 | 20.3 | 172.6 | 1.2 | 15.0 | 453 | 26.4 | 58.3 | 12.5 | 39.1 | 14 | 1.2 | 269 | 29.7 | 5.05 | 2.44 | 5.0 | 0.87 | 0.12 | A | A |
| 5 | 20.3 | 172.6 | 1.2 | 15.0 | 455 | 28.0 | 61.5 | 12.5 | 43.6 | 14 | 1.2 | 270 | 29.6 | 5.05 | 2.46 | 4.8 | 0.66 | 0.13 | A | A |
| 6 | 22.0 | 187.0 | 1.2 | 20.0 | 449 | 28.9 | 64.4 | 16.7 | 38.7 | 14 | 1.2 | 269 | 29.9 | 5.08 | 2.42 | 3.7 | 2.16 | 0.18 | A | B |
| 7 | 22.0 | 187.0 | 1.2 | 20.0 | 453 | 31.4 | 69.3 | 16.7 | 44.9 | 14 | 1.2 | 270 | 29.9 | 5.10 | 2.44 | 3.9 | 1.86 | 0.18 | A | B |
| 8 | 22.0 | 187.0 | 1.2 | 20.0 | 458 | 39.6 | **86.5** | 16.7 | **69.9** | 14 | 1.2 | 268 | 29.7 | 5.03 | 2.42 | 3.4 | **3.67** | **0.25** | C | C |
| 9 | 23.7 | 201.5 | 1.2 | 25.0 | 455 | 40.1 | **88.1** | **20.8** | **62.6** | 14 | 1.2 | 269 | 29.6 | 5.03 | 2.44 | **1.9** | **4.65** | **0.21** | C | C |

Table 2

| No. | Leading electrode | | | | | | | | | Trailing electrode | | | | | | Evaluation | | | | |
|---|---|---|---|---|---|---|---|---|---|---|---|---|---|---|---|---|---|---|---|---|
| | Wire feed speed (in m/min) | Wire melting speed (in g/min) | Wire diameter (in mm) | B/w tip & metal (in mm) | Welding current (in A) | Welding voltage (in V) | Expression (1) Calculated value | Expression (2) Calculated value | Expression (3) Calculated value | Wire feed speed (in m/min) | Wire diameter (in mm) | Welding current (in A) | Welding voltage (in V) | Expression (4) Calculated value | Expression (5) Calculated value | Penetration (in mm) | Spatter (in g/min) | Bead shape | Undercut | General evaluation |
| 10 | 10.3 | 121.5 | 1.4 | 5.0 | 501 | 23.4 | **46.7** | **3.6** | **53.0** | 10 | 1.4 | 297 | 29.5 | 5.69 | 2.99 | 6.9 | **3.12** | **0.23** | C | C |
| 11 | 12.1 | 142.8 | 1.4 | 10.0 | 495 | 25.0 | **50.5** | 7.1 | **36.4** | 10 | 1.4 | 302 | 30.5 | 5.99 | 2.99 | 6.6 | **3.97** | **0.24** | C | C |
| 12 | 12.1 | 142.8 | 1.4 | 10.0 | 503 | 28.3 | 56.3 | 7.1 | 45.2 | 10 | 1.4 | 300 | 30.2 | 5.89 | 2.98 | 6.2 | 0.79 | 0.12 | A | A |
| 13 | 12.1 | 142.8 | 1.4 | 10.0 | 505 | 28.7 | 56.8 | 7.1 | 46.1 | 10 | 1.4 | 297 | 30.6 | 5.91 | 2.88 | 5.9 | 0.72 | 0.13 | A | A |
| 14 | 13.9 | 164.0 | 1.4 | 15.0 | 502 | 30.2 | 60.2 | 10.7 | 39.6 | 10 | 1.4 | 302 | 29.5 | 5.79 | 3.09 | 5.9 | 0.65 | 0.11 | A | A |
| 15 | 13.9 | 164.0 | 1.4 | 15.0 | 503 | 32.5 | 64.6 | 10.7 | 45.6 | 10 | 1.4 | 298 | 29.9 | 5.79 | 2.97 | 5.8 | 0.78 | 0.11 | A | A |
| 16 | 15.8 | 186.4 | 1.4 | 20.0 | 504 | 32.6 | 64.7 | 14.3 | 39.0 | 10 | 1.4 | 302 | 30.5 | 5.99 | 2.99 | 5.5 | 0.87 | 0.12 | A | A |
| 17 | 15.8 | 186.4 | 1.4 | 20.0 | 505 | 34.6 | 68.5 | 14.3 | 43.8 | 10 | 1.4 | 297 | 29.9 | 5.77 | 2.95 | 5.3 | 0.98 | 0.11 | A | A |
| 18 | 15.8 | 186.4 | 1.4 | 20.0 | 508 | 45.0 | **88.6** | 14.3 | **73.1** | 10 | 1.4 | 298 | 29.5 | 5.71 | 3.01 | 4.9 | **4.67** | 0.14 | C | C |
| 19 | 17.0 | 200.6 | 1.4 | 25.0 | 498 | 35.2 | 70.7 | 17.9 | 40.1 | 10 | 1.4 | 302 | 29.5 | 5.79 | 3.09 | 4.3 | 1.65 | 0.17 | A | B |
| 20 | 17.0 | 200.6 | 1.4 | 25.0 | 503 | 46.2 | **91.8** | 17.9 | **67.7** | 10 | 1.4 | 298 | 29.9 | 5.79 | 2.97 | 3.1 | **4.78** | 0.19 | A | C |
| 21 | 8.2 | 96.8 | 1.4 | 5.0 | 451 | 24.5 | **54.3** | **3.6** | **57.1** | 8 | 1.4 | 279 | 28.6 | 6.48 | 2.72 | 6.9 | **3.21** | **0.25** | C | C |
| 22 | 9.9 | 116.8 | 1.4 | 10.0 | 448 | 25.0 | **55.8** | 7.1 | **36.4** | 8 | 1.4 | 272 | 28.2 | 6.23 | 2.62 | 6.7 | **2.78** | **0.27** | C | C |
| 23 | 9.9 | 116.8 | 1.4 | 10.0 | 449 | 27.4 | 61.0 | 7.1 | 43.5 | 8 | 1.4 | 275 | 28.7 | 6.41 | 2.64 | 6.4 | 0.58 | 0.12 | A | A |
| 24 | 9.9 | 116.8 | 1.4 | 10.0 | 450 | 28.3 | 62.9 | 7.1 | 46.2 | 8 | 1.4 | 279 | 28.6 | 6.48 | 2.72 | 6.4 | 0.67 | 0.11 | A | A |
| 25 | 11.6 | 136.9 | 1.4 | 15.0 | 449 | 30.5 | 67.9 | 10.7 | 42.1 | 8 | 1.4 | 278 | 28.6 | 6.46 | 2.70 | 5.4 | 0.75 | 0.13 | A | A |
| 26 | 11.6 | 136.9 | 1.4 | 15.0 | 451 | 32.5 | 72.1 | 10.7 | 47.4 | 8 | 1.4 | 273 | 28.7 | 6.37 | 2.60 | 5.3 | 0.68 | 0.14 | A | A |
| 27 | 12.8 | 151.0 | 1.4 | 20.0 | 450 | 32.4 | 72.0 | 14.3 | 39.1 | 8 | 1.4 | 273 | 28.8 | 6.39 | 2.59 | 4.9 | 0.78 | 0.11 | A | A |
| 28 | 12.8 | 151.0 | 1.4 | 20.0 | 452 | 34.2 | 75.7 | 14.3 | 43.2 | 8 | 1.4 | 272 | 28.6 | 6.32 | 2.59 | 4.8 | 0.56 | 0.12 | A | A |
| 29 | 12.8 | 151.0 | 1.4 | 20.0 | 453 | 40.2 | **88.7** | 14.3 | **59.5** | 8 | 1.4 | 273 | 28.2 | 6.25 | 2.64 | 4.4 | **3.27** | **0.22** | C | C |
| 30 | 6.9 | 81.4 | 1.4 | 5.0 | 398 | 22.2 | **55.8** | **3.6** | **50.7** | 8 | 1.4 | 274 | 28.6 | 6.37 | 2.63 | 6.0 | 3.37 | **0.24** | C | C |
| 31 | 8.1 | 95.6 | 1.4 | 10.0 | 402 | 22.3 | **55.5** | 7.1 | **29.4** | 8 | 1.4 | 272 | 28.2 | 6.23 | 2.62 | 5.7 | **3.65** | **0.22** | C | C |
| 32 | 8.1 | 95.6 | 1.4 | 10.0 | 403 | 26.4 | 65.5 | 7.1 | 41.0 | 8 | 1.4 | 273 | 28.7 | 6.37 | 2.60 | 5.2 | 1.34 | 0.18 | A | B |
| 33 | 8.1 | 95.6 | 1.4 | 10.0 | 404 | 28.1 | 69.6 | 7.1 | 46.2 | 8 | 1.4 | 271 | 28.6 | 6.30 | 2.57 | 5.0 | 1.28 | 0.18 | A | B |
| 34 | 9.3 | 109.7 | 1.4 | 15.0 | 399 | 29.1 | 72.9 | 10.7 | 38.9 | 8 | 1.4 | 278 | 28.6 | 6.46 | 2.70 | 4.9 | 1.89 | 0.16 | A | B |
| 35 | 10.8 | 127.4 | 1.4 | 20.0 | 401 | 32.1 | 80.0 | 14.3 | 40.8 | 8 | 1.4 | 273 | 28.8 | 6.39 | 2.59 | 4.7 | 1.88 | 0.15 | A | B |
| 36 | 10.8 | 127.4 | 1.4 | 20.0 | 404 | 33.8 | 83.7 | 14.3 | 44.6 | 8 | 1.4 | 271 | 28.6 | 6.30 | 2.57 | 4.6 | 1.96 | 0.17 | A | B |
| 37 | 10.8 | 127.4 | 1.4 | 20.0 | 405 | 38.4 | **94.8** | 14.3 | **57.3** | 8 | 1.4 | 274 | 28.2 | 6.28 | 2.66 | 4.2 | **4.13** | **0.23** | C | C |
| 38 | 13.5 | 159.3 | 1.4 | 30.0 | 405 | 39.0 | **96.3** | **21.4** | **49.2** | 8 | 1.4 | 270 | 28.8 | 6.32 | 2.53 | **2.3** | **4.21** | 0.17 | C | C |

EP 2 781 292 B1

Table 3

| No. | Leading electrode Wire feed speed (in m/min) | Wire melting speed (in g/min) | Wire diameter (in mm) | B/w tip & metal (in mm) | Welding current (in A) | Welding voltage (in V) | Expression (1) Calculated value | Expression (2) Calculated value | Expression (3) Calculated value | Trailing electrode Wire feed speed (in m/min) | Wire diameter (in mm) | Welding current (in A) | Welding voltage (in V) | Expression (4) Calculated value | Expression (5) Calculated value | Penetration (in mm) | Spatter (in g/min) | Bead shape | Undercut | General evaluation |
|---|---|---|---|---|---|---|---|---|---|---|---|---|---|---|---|---|---|---|---|---|
| 39 | 7.1 | 110.8 | 1.6 | 5.0 | 500 | 25.0 | 50.0 | 3.1 | 55.4 | 8 | 1.6 | 342 | 24.2 | 5.15 | 4.83 | 7.5 | 3.56 | 0.25 | C | C |
| 40 | 8.9 | 138.8 | 1.6 | 10.0 | 499 | 25.0 | 50.1 | 6.3 | 34.8 | 8 | 1.6 | 347 | 24.9 | 5.37 | 4.84 | 7.0 | 3.76 | 0.25 | C | C |
| 41 | 8.9 | 138.8 | 1.6 | 10.0 | 502 | 28.2 | 56.2 | 6.3 | 43.8 | 8 | 1.6 | 348 | 24.6 | 5.32 | 4.92 | 7.1 | 0.66 | 0.09 | A | A |
| 42 | 8.9 | 138.8 | 1.6 | 10.0 | 505 | 29.0 | 57.4 | 6.3 | 45.8 | 8 | 1.6 | 341 | 24.2 | 5.13 | 4.81 | 6.8 | 0.82 | 0.11 | A | A |
| 43 | 9.7 | 151.3 | 1.6 | 15.0 | 500 | 31.4 | 62.8 | 9.4 | 39.8 | 8 | 1.6 | 349 | 24.9 | 5.41 | 4.89 | 5.9 | 0.76 | 0.12 | A | A |
| 44 | 9.7 | 151.3 | 1.6 | 15.0 | 502 | 33.5 | 66.7 | 9.4 | 44.9 | 8 | 1.6 | 347 | 24.6 | 5.31 | 4.89 | 5.6 | 0.59 | 0.11 | A | A |
| 45 | 10.8 | 168.5 | 1.6 | 20.0 | 499 | 33.8 | 67.7 | 12.5 | 38.7 | 8 | 1.6 | 347 | 24.3 | 5.24 | 4.96 | 5.5 | 0.67 | 0.13 | A | A |
| 46 | 10.8 | 168.5 | 1.6 | 20.0 | 500 | 35.6 | 71.2 | 12.5 | 42.7 | 8 | 1.6 | 349 | 24.6 | 5.34 | 4.95 | 5.3 | 0.78 | 0.11 | A | A |
| 47 | 10.8 | 168.5 | 1.6 | 20.0 | 501 | 43.9 | 87.6 | 12.5 | 64.7 | 8 | 1.6 | 348 | 24.6 | 5.32 | 4.92 | 4.8 | 3.76 | 0.18 | C | C |
| 48 | 13.8 | 215.3 | 1.6 | 35.0 | 503 | 44.9 | 89.3 | 21.9 | 49.0 | 8 | 1.6 | 341 | 23.7 | 5.03 | 4.91 | 2.3 | 4.89 | 0.18 | C | C |
| 49 | 5.9 | 92.0 | 1.6 | 5.0 | 446 | 23.3 | 52.2 | 3.1 | 50.2 | 8 | 1.6 | 342 | 24.6 | 5.23 | 4.75 | 6.7 | 3.31 | 0.24 | C | C |
| 50 | 7.2 | 112.3 | 1.6 | 10.0 | 443 | 24.3 | 54.9 | 6.3 | 33.8 | 8 | 1.6 | 347 | 24.9 | 5.37 | 4.84 | 6.0 | 3.89 | 0.25 | C | C |
| 51 | 7.2 | 112.3 | 1.6 | 10.0 | 448 | 27.0 | 60.3 | 6.3 | 40.8 | 8 | 1.6 | 348 | 24.6 | 5.32 | 4.92 | 5.8 | 0.78 | 0.12 | A | A |
| 52 | 7.2 | 112.3 | 1.6 | 10.0 | 453 | 29.1 | 64.2 | 6.3 | 46.3 | 8 | 1.6 | 341 | 24.0 | 5.09 | 4.85 | 5.7 | 0.57 | 0.15 | A | A |
| 53 | 8.6 | 134.2 | 1.6 | 15.0 | 452 | 30.5 | 67.5 | 9.4 | 40.7 | 8 | 1.6 | 349 | 24.6 | 5.34 | 4.95 | 5.4 | 0.63 | 0.11 | A | A |
| 54 | 8.6 | 134.2 | 1.6 | 15.0 | 453 | 32.3 | 71.3 | 9.4 | 45.5 | 8 | 1.6 | 347 | 24.9 | 5.37 | 4.84 | 5.1 | 0.79 | 0.13 | A | A |
| 55 | 9.4 | 146.6 | 1.6 | 20.0 | 451 | 33.0 | 73.2 | 12.5 | 39.3 | 8 | 1.6 | 347 | 24.6 | 5.31 | 4.89 | 5.1 | 0.84 | 0.11 | A | A |
| 56 | 9.4 | 146.6 | 1.6 | 20.0 | 452 | 34.6 | 76.5 | 12.5 | 43.0 | 8 | 1.6 | 349 | 24.6 | 5.34 | 4.95 | 4.8 | 0.59 | 0.12 | A | A |
| 57 | 9.4 | 146.6 | 1.6 | 20.0 | 451 | 38.9 | 86.3 | 12.5 | 54.5 | 8 | 1.6 | 348 | 24.9 | 5.39 | 4.86 | 4.3 | 4.89 | 0.19 | C | C |
| 58 | 12.4 | 193.4 | 1.6 | 35.0 | 455 | 42.9 | 94.3 | 21.9 | 49.1 | 8 | 1.6 | 341 | 23.8 | 5.05 | 4.89 | 2.2 | 4.15 | 0.18 | C | C |
| 59 | 4.8 | 74.9 | 1.6 | 5.0 | 410 | 20.0 | 48.8 | 3.1 | 35.6 | 8 | 1.6 | 347 | 24.7 | 5.33 | 4.87 | 6.2 | 3.22 | 0.23 | C | C |
| 60 | 6.3 | 98.3 | 1.6 | 10.0 | 398 | 21.9 | 55.0 | 6.3 | 29.8 | 8 | 1.6 | 347 | 24.9 | 5.37 | 4.84 | 5.8 | 3.78 | 0.23 | C | B |
| 61 | 6.3 | 98.3 | 1.6 | 10.0 | 401 | 26.1 | 65.1 | 6.3 | 41.6 | 8 | 1.6 | 348 | 24.9 | 5.39 | 4.86 | 5.3 | 1.22 | 0.17 | A | B |
| 62 | 6.3 | 98.3 | 1.6 | 10.0 | 403 | 27.0 | 67.0 | 6.3 | 44.1 | 8 | 1.6 | 341 | 23.8 | 5.05 | 4.89 | 5.0 | 1.82 | 0.12 | A | B |
| 63 | 7.3 | 113.9 | 1.6 | 15.0 | 403 | 29.0 | 72.0 | 9.4 | 39.3 | 8 | 1.6 | 349 | 24.9 | 5.41 | 4.89 | 5.2 | 1.65 | 0.14 | A | B |
| 64 | 7.3 | 113.9 | 1.6 | 15.0 | 406 | 30.5 | 75.1 | 9.4 | 42.8 | 8 | 1.6 | 347 | 24.8 | 5.35 | 4.86 | 4.9 | 1.56 | 0.17 | A | B |
| 65 | 8.2 | 127.9 | 1.6 | 20.0 | 399 | 32.0 | 80.2 | 12.5 | 41.1 | 8 | 1.6 | 347 | 24.9 | 5.37 | 4.84 | 4.8 | 1.89 | 0.11 | A | B |
| 66 | 8.2 | 127.9 | 1.6 | 20.0 | 401 | 33.2 | 82.8 | 12.5 | 43.8 | 8 | 1.6 | 349 | 24.6 | 5.34 | 4.95 | 4.6 | 2.16 | 0.18 | A | B |
| 67 | 11.4 | 177.8 | 1.6 | 35.0 | 402 | 41.3 | 102.7 | 21.9 | 53.6 | 8 | 1.6 | 341 | 23.8 | 5.05 | 4.89 | 2.1 | 4.89 | 0.17 | C | C |

14

Table 4

| No. | Leading electrode | | | | | | | | | Trailing electrode | | | | | | | Evaluation | | | |
|---|---|---|---|---|---|---|---|---|---|---|---|---|---|---|---|---|---|---|---|---|
| | Wire feed speed (in m/min) | Wire melting speed (in g/min) | Wire diameter (in mm) | B/w tip & metal (in mm) | Welding current (in A) | Welding voltage (in V) | Expression (1) Calculated value | Expression (2) Calculated value | Expression (3) Calculated value | Wire feed speed (in m/min) | Wire diameter (in mm) | Welding current (in A) | Welding voltage (in V) | Expression (4) Calculated value | Expression (5) Calculated value | Penetration (in mm) | Spatter (in g/min) | Bead shape | Undercut | General evaluation |
| 68 | 9.7 | 151.3 | 1.6 | 15.0 | 500 | 31.5 | 63.0 | 9.4 | 40.0 | 6 | 1.6 | 276 | 21.0 | 4.81 | 3.63 | 5.6 | 0.89 | 0.25 | A | C |
| 69 | 9.7 | 151.3 | 1.6 | 15.0 | 501 | 31.4 | 62.7 | 9.4 | 39.6 | 6 | 1.6 | 300 | 26.3 | 6.54 | 3.42 | 5.7 | 0.76 | 0.13 | A | A |
| 70 | 9.7 | 151.3 | 1.6 | 15.0 | 503 | 31.3 | 62.2 | 9.4 | 39.1 | 6 | 1.6 | 308 | 27.2 | 6.95 | 3.49 | 5.6 | 0.52 | 0.12 | A | A |
| 71 | 9.7 | 151.3 | 1.6 | 15.0 | 501 | 31.4 | 62.7 | 9.4 | 39.6 | 6 | 1.6 | 329 | 30.0 | 8.19 | 3.61 | 5.5 | 4.56 | 0.18 | C | C |
| 72 | 9.7 | 151.3 | 1.6 | 15.0 | 498 | 31.4 | 63.1 | 9.4 | 40.1 | 8 | 1.6 | 312 | 21.0 | 4.08 | 4.64 | 5.7 | 0.58 | 0.28 | A | C |
| 73 | 9.7 | 151.3 | 1.6 | 15.0 | 499 | 31.2 | 62.5 | 9.4 | 39.4 | 8 | 1.6 | 342 | 24.0 | 5.11 | 4.87 | 5.6 | 0.65 | 0.14 | A | A |
| 74 | 9.7 | 151.3 | 1.6 | 15.0 | 496 | 31.4 | 63.3 | 9.4 | 40.4 | 8 | 1.6 | 352 | 25.3 | 5.54 | 4.90 | 5.5 | 0.69 | 0.11 | A | A |
| 75 | 9.7 | 151.3 | 1.6 | 15.0 | 502 | 31.4 | 62.5 | 9.4 | 39.5 | 8 | 1.6 | 390 | 30.0 | 7.28 | 5.07 | 5.6 | 3.89 | 0.19 | C | C |
| 76 | 11.6 | 136.9 | 1.4 | 15.0 | 449 | 30.9 | 68.8 | 10.7 | 43.2 | 8 | 1.4 | 253 | 23.6 | 4.85 | 2.71 | 5.3 | 0.89 | 0.27 | A | A |
| 77 | 11.6 | 136.9 | 1.4 | 15.0 | 450 | 30.7 | 68.2 | 10.7 | 42.5 | 8 | 1.4 | 275 | 28.4 | 6.35 | 2.66 | 5.2 | 0.82 | 0.12 | A | A |
| 78 | 11.6 | 136.9 | 1.4 | 15.0 | 452 | 30.5 | 67.5 | 10.7 | 41.6 | 8 | 1.4 | 283 | 30.3 | 6.97 | 2.64 | 5.3 | 0.65 | 0.13 | A | C |
| 79 | 11.6 | 136.9 | 1.4 | 15.0 | 448 | 30.5 | 68.1 | 10.7 | 42.3 | 8 | 1.4 | 307 | 34.8 | 8.68 | 2.71 | 5.2 | 3.69 | 0.17 | C | C |
| 80 | 11.6 | 136.9 | 1.4 | 15.0 | 452 | 30.2 | 66.8 | 10.7 | 40.7 | 10 | 1.4 | 267 | 24.0 | 4.16 | 2.97 | 5.4 | 0.89 | 0.26 | A | A |
| 81 | 11.6 | 136.9 | 1.4 | 15.0 | 453 | 30.4 | 67.1 | 10.7 | 41.1 | 10 | 1.4 | 300 | 29.9 | 5.83 | 3.01 | 5.4 | 0.67 | 0.11 | A | A |
| 82 | 11.6 | 136.9 | 1.4 | 15.0 | 450 | 30.5 | 67.8 | 10.7 | 41.9 | 10 | 1.4 | 314 | 31.0 | 6.33 | 3.18 | 5.3 | 0.77 | 0.13 | A | C |
| 83 | 11.6 | 136.9 | 1.4 | 15.0 | 449 | 30.5 | 67.9 | 10.7 | 42.1 | 10 | 1.4 | 330 | 37.5 | 8.04 | 2.90 | 5.4 | 4.34 | 0.15 | C | C |
| 84 | 11.6 | 136.9 | 1.4 | 15.0 | 452 | 30.4 | 67.3 | 10.7 | 41.3 | 12 | 1.4 | 284 | 27.0 | 4.15 | 2.99 | 5.5 | 0.98 | 0.28 | A | A |
| 85 | 11.6 | 136.9 | 1.4 | 15.0 | 449 | 30.2 | 67.3 | 10.7 | 41.3 | 12 | 1.4 | 319 | 30.5 | 5.27 | 3.34 | 5.3 | 0.87 | 0.13 | A | A |
| 86 | 11.6 | 136.9 | 1.4 | 15.0 | 449 | 30.5 | 67.9 | 10.7 | 42.1 | 12 | 1.4 | 330 | 32.0 | 5.72 | 3.40 | 5.5 | 0.74 | 0.12 | A | C |
| 87 | 11.6 | 136.9 | 1.4 | 15.0 | 449 | 30.5 | 67.9 | 10.7 | 42.1 | 12 | 1.4 | 356 | 37.0 | 7.13 | 3.43 | 5.5 | 3.69 | 0.16 | C | C |
| 88 | 20.3 | 172.6 | 1.2 | 15.0 | 453 | 26.1 | 57.6 | 12.5 | 38.2 | 14 | 1.2 | 254 | 25.0 | 4.01 | 2.58 | 5.0 | 0.98 | 0.28 | A | C |
| 89 | 20.3 | 172.6 | 1.2 | 15.0 | 450 | 26.3 | 58.4 | 12.5 | 39.3 | 14 | 1.2 | 272 | 29.9 | 5.14 | 2.47 | 4.9 | 0.75 | 0.13 | A | A |
| 90 | 20.3 | 172.6 | 1.2 | 15.0 | 452 | 26.4 | 58.4 | 12.5 | 39.2 | 14 | 1.2 | 288 | 31.1 | 5.66 | 2.67 | 5.0 | 0.88 | 0.11 | C | C |
| 91 | 20.3 | 172.6 | 1.2 | 15.0 | 451 | 26.4 | 58.5 | 12.5 | 39.4 | 14 | 1.2 | 308 | 37.0 | 7.20 | 2.56 | 4.9 | 4.89 | 0.15 | A | A |
| 92 | 20.3 | 172.6 | 1.2 | 15.0 | 453 | 26.5 | 58.5 | 12.5 | 39.4 | 16 | 1.2 | 285 | 27.0 | 4.25 | 3.01 | 5.0 | 0.76 | 0.25 | A | C |
| 93 | 20.3 | 172.6 | 1.2 | 15.0 | 455 | 26.3 | 57.8 | 12.5 | 38.4 | 16 | 1.2 | 300 | 32.0 | 5.31 | 2.81 | 4.8 | 0.84 | 0.14 | A | A |
| 94 | 20.3 | 172.6 | 1.2 | 15.0 | 454 | 26.4 | 58.1 | 12.5 | 38.9 | 16 | 1.2 | 312 | 33.6 | 5.80 | 2.90 | 4.9 | 0.79 | 0.12 | A | A |
| 95 | 20.3 | 172.6 | 1.2 | 15.0 | 453 | 26.1 | 57.6 | 12.5 | 38.2 | 16 | 1.2 | 330 | 39.0 | 7.12 | 2.79 | 5.0 | 5.23 | 0.18 | C | C |

Table 1 (sample Nos. 1 to 9) shows the results of the experiment with the wire diameter $R_L$ set to 1.2 mm and the welding current $I_L$ set to about 450 A.

Table 2 (sample Nos. 10 to 38) shows the results of the experiment with the wire diameter $R_L$ set to 1.4 mm and the welding current $I_L$ set to about 500 A (sample Nos. 10 to 20), about 450 A (sample Nos. 21 to 29), and about 400 A (sample Nos. 30 to 38).

Table 3 (sample Nos. 39 to 67) shows the results of the experiment with the wire diameter $R_L$ set to 1.6 mm and the welding current $I_L$ set to about 500 A (sample Nos. 39 to 48), about 450 A (sample Nos. 49 to 58), and about 400 A (sample Nos. 59 to 67).

Table 4 (sample Nos. 68 to 95) shows the results of the experiment with the wire diameter $R_T$ of the trailing electrode set to 1.6 mm (sample Nos. 68 to 75), 1.4 mm (sample Nos. 76 to 87), and 1.2 mm (sample Nos. 88 to 95), and the welding current $I_T$ and the welding voltage $V_T$ changed.

In Tables 1 to 4, the evaluation values correspond to pass/fail determinations as follows. Here, "A" represents very good, "B" represents good, and "C" represents a defect.

(1) Spatter production amount

A: 1.0 g/min or less
B: 1.0 to 3.0 g/min (both exclusive)
C: 3.0 g/min or more

(2) Penetration (depth of horizontal penetration illustrated in Fig. 5C)

A: 4.5 mm or more
B: 3.0 to 4.5 g/min (both exclusive)
C: 3.0 mm or less

(3) Bead shape (a/b, the ratio of a to b illustrated in Fig. 5C)

A: 0.15 or less
B: 0.15 to 0.2 (both exclusive)
C: 0.2 or more

(4) Undercut evaluation

A: Undercut not formed
B: Undercut formed

(5) General evaluation

A: All evaluation items (1) to (4) are A
B: No C for evaluation items (1) to (4) (other than all A)
C: At least one of evaluation items (1) to (4) is C

Result of First Experiment

Among the results of the first experiment shown in Tables 1 to 3, the calculated values of the expressions (1), (2), and (3) that do not fall within the aforementioned specified ranges are underlined. Evaluation results (penetration, spatter production amount, and bead shape) that are determined to be defective are also underlined.

It can be seen that, when at least one of the calculated values of the expressions (1), (2), and (3) for a sample does not fall within the specified range, that sample is determined to be "C" (defect) in the general evaluation. It can also be seen that, when all the calculated values of the expressions (1), (2), and (3) for a sample fall within the specified ranges, that sample is determined to be "A" (very good) or "B" (good).

Result of Second Experiment

Among the results of the second experiment shown in Table 4, the calculated values of the expressions (4) and (5) that do not fall within the aforementioned specified ranges are underlined. Evaluation results (penetration, spatter production amount, and bead shape) that are determined to be defective are also underlined.

It can be seen that, when at least one of the calculated values of the expressions (4) and (5) for a sample does not fall within the specified range, that sample is determined to be "C" (defect) in the general evaluation. It can also be seen that, when all the calculated values of the expressions (4) and (5) for a sample fall within the specified ranges, that sample is determined to be "A" (very good).

It can be confirmed from the above-described two experiments that, by setting the welding conditions so that the parameters of the leading electrode 4 satisfy the conditions of the expression (1), and preferably, the parameters of the leading electrode 4 also satisfy the conditions of the expressions (2) and (3), and more preferably, the parameters of the trailing electrode 5 satisfy the expressions (4) and (5), production of spatter is suppressed, undercut is not formed, a good bead shape is obtained, and the depth of penetration can be increased.

Third Experiment

Next, welding is performed with the present invention method and with the related-art tandem gas-shielded arc welding methods (first and second related-art methods), and penetrations and the spatter production amounts are compared. The results are as follows.

In each welding method, horizontal fillet welding is performed on both sides of the 12 mm thick base materials (lower plate 1 and vertical plate 2) at the welding speed of 100 cm/min and with the vertical foot length and the horizontal foot length are the same as each other and are in a range from 7 to 7.5 mm. The welding conditions are the same on both sides of the vertical plate 2.

As the first related-art method, a tandem pulse MAG method is used.

Both the electrodes use a solid wire having a diameter of 1.2 mm as the wire, and a gas mixture of argon gas and carbon dioxide gas (20% by volume) are used for both the electrodes as the shielding gas. The welding current and the welding voltage of the leading electrode 4 are 300 A and 29.8 V, and the welding current and the welding voltage of the trailing electrode 5 are 330A and 31.0V.

The torch angle of both the electrodes is 45°.

As the second related-art method, tandem gas-shielded arc welding using a 100% carbon dioxide gas as the shielding gas for both the electrodes is used.

The wires of both the electrodes use a flux-cored wire having a diameter of 1.6 mm, and a 100% carbon dioxide gas is used as the shielding gas for both the electrodes. The welding current and the welding voltage of the leading electrode are 450 A and 33.0 V, and the welding current and the welding voltage of the trailing electrode are 350A and 31.0V.

The torch angle of both the electrodes is 45°.

Welding with the present invention method is performed under the following conditions.

The leading electrode uses a solid wire having a diameter of 1.6 mm as the wire, the distance between the tip and the base metal is 13 mm, and the torch angle is 15°. The welding current and the welding voltage of the leading electrode are 510 A and 33.8 V.

The trailing electrode uses a flux-cored wire having a diameter of 1.4 mm as the wire, the distance between the tip and the base metal is 25 mm, and the torch angle is 45°. The welding current and the welding voltage of the trailing electrode are 300 A and 31.0 V.

A 100% carbon dioxide gas is used as the shielding gas G for both the electrodes.

Figs. 4A to 4C are sectional photomacrograph images of weld areas formed by the related-art and present invention welding methods.

As illustrated in Figs. 4A and 4B, it can be seen that, in welding using the first related-art method and the second related-art method, there is an about 7 mm non-welded portion in the vertical plate 2, and as illustrated in Fig. 4C, in welding using the present invention method, complete penetration without a non-welded portion is possible. The effect of increasing penetration, which can be obtained only with a welding method using a laser in related-art, is realized with the gas-shielded arc welding method in the present invention for the first time.

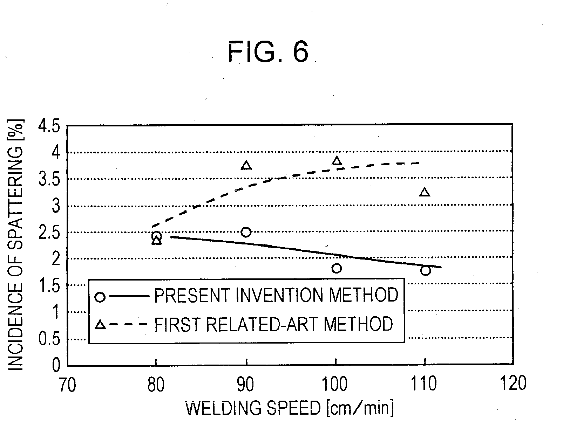

Fig. 6 illustrates the incidence of spattering with the present invention method and the first related-art method when the welding speed is varied in the above-described welding conditions. In the first related-art method, a gas mixture, with which the smallest amount of spatter is produced, is used.

Here, the incidence of spattering is calculated by the following expression:

$$\text{Incidence of spattering} = (\text{Spatter production amount (in g/min)}/\text{wire melting speed (in g/min)}) \times 100 \ (\%).$$

As illustrated in Fig. 6, it is confirmed that, in the present invention method, despite use of a 100% carbon dioxide gas as the shielding gas for both the electrodes, the incidence of spattering is lower than that with the tandem pulse MAG method as the first related-art method. The Incidence of spattering is reduced by about 50% at the maximum.

Fourth Experiment

Next, as a fourth experiment, horizontal fillet welding is performed on one side of the 12 mm thick vertical plate 2. In the fourth experiment, samples are set such that some of the samples satisfy and the other samples do not satisfy the following conditions by changing chemical composition of the wire of the trailing electrode 5: the sum of the $TiO_2$ and $SiO_2$ contents is 5.0 to 9.5% by mass, the $TiO_2$ content is 4.5 to 9.0% by mass, and the $SiO_2$ content is 0.5 to 0.8% by mass. The foot length is unchanged through the samples of the fourth experiment, and the bead shape and undercut are evaluated.

The contents other than $TiO_2$ and $SiO_2$ are set as follows: the C content is 0.02 to 0.09% by mass, the Si content is 0.3 to 0.75% by mass, and the Mn content is 2.0 to 3.0% by mass. Portions of the wire other than the above-described contents are formed of Fe.

The welding conditions for each electrode are the same as those of the sample No. 43 (see Table 3) of the first experiment.

Table 5 shows the results of the fourth experiment. In Table 5, the results are written in order from the leftmost column as follows: sample No.: chemical composition of the trailing electrode, that is, the C, Si, Mn, $TiO_2$, $SiO_2$ contents, and the sum of $TiO_2$ and $SiO_2$ contents (indicated by "a" in Table 5) in % by mass; and evaluation results of undercut and the bead shape.

The undercut and the bead shape are evaluated on the same criteria as those of the first and second experiments.

Table 5

| No. | Chemical composition of wire (in % by mass) * portion other than listed below is Fe | | | | | | Evaluation | |
|-----|------|------|------|--------|--------|-------|----------|------------|
| | C | Si | Mn | $TiO_2$ | $SiO_2$ | a | Undercut | Bead shape |
| 96 | 0.05 | 0.30 | 2.54 | 5.0 | 0.64 | 5.64 | A | A |
| 97 | 0.06 | 0.50 | 2.65 | 6.0 | 0.75 | 6.75 | A | A |
| 98 | 0.05 | 0.75 | 2.87 | 6.5 | 0.63 | 7.13 | A | A |
| 99 | 0.06 | 0.45 | 2.00 | 7.5 | 0.79 | 8.29 | A | A |
| 100 | 0.05 | 0.53 | 2.50 | 5.4 | 0.64 | 6.04 | A | A |
| 101 | 0.07 | 0.65 | 3.00 | 5.9 | 0.68 | 6.58 | A | A |
| 102 | 0.06 | 0.45 | 2.84 | 7.2 | 0.64 | 7.84 | A | A |
| 103 | 0.06 | 0.48 | 2.98 | 4.6 | 0.62 | 5.22 | A | A |
| 104 | 0.05 | 0.47 | 2.64 | 4.9 | 0.54 | 5.44 | A | A |
| 105 | 0.07 | 0.56 | 2.31 | 5.1 | 0.78 | 5.88 | A | A |
| 106 | 0.06 | 0.65 | 2.42 | 6.0 | 0.75 | 6.75 | A | A |
| 107 | 0.05 | 0.68 | 2.13 | 4.9 | 0.50 | 5.40 | A | A |
| 108 | 0.04 | 0.64 | 2.78 | 6.0 | 0.54 | 6.54 | A | A |
| 109 | 0.07 | 0.54 | 2.86 | 4.8 | 0.80 | 5.60 | A | A |
| 110 | 0.06 | 0.38 | 2.54 | 9.0 | 0.50 | 9.50 | A | A |
| 111 | 0.06 | 0.64 | 2.65 | 8.4 | 0.64 | 9.04 | A | A |
| 112 | 0.06 | 0.61 | 2.61 | 8.5 | 0.78 | 9.28 | A | A |
| 113 | 0.06 | 0.57 | 2.78 | 7.5 | 0.54 | 8.04 | A | A |
| 114 | 0.06 | 0.59 | 2.68 | 6.4 | 0.62 | 7.02 | A | A |
| 115 | 0.05 | 0.45 | 2.74 | 5.9 | 0.74 | 6.64 | A | A |
| 116 | 0.06 | 0.33 | 2.24 | 8.4 | 0.71 | 9.11 | A | A |
| 117 | 0.07 | 0.65 | 2.87 | **10.4** | 0.68 | **11.08** | C | A |

(continued)

| No. | Chemical composition of wire (in % by mass) * portion other than listed below is Fe | | | | | | Evaluation | |
|---|---|---|---|---|---|---|---|---|
| | C | Si | Mn | TiO$_2$ | SiO$_2$ | a | Undercut | Bead shape |
| 118 | 0.07 | 0.56 | 2.64 | **2.3** | **0.06** | **2.36** | A | C |
| 119 | 0.06 | 0.65 | 2.31 | **1.3** | **0.04** | **1.34** | C | C |
| 120 | 0.06 | 0.68 | 2.31 | **3.2** | **0.87** | **4.07** | c | C |
| 121 | 0.05 | 0.64 | 2.42 | **2.9** | 0.60 | **3.50** | C | C |
| 122 | 0.06 | 0.65 | 2.78 | **1.6** | 0.70 | **2.30** | C | C |
| *a=TiO$_2$+SiO$_2$ | | | | | | | | |

In Table 5, the sample Nos. 96 to 116 satisfy the following conditions: the sum of the TiO$_2$ and SiO$_2$ contents is 5.0 to 9.5% by mass, the TiO$_2$ content is 4.5 to 9.0% by mass, and the SiO$_2$ content is 0.5 to 0.8% by mass. The samples Nos. 117 to 122 do not satisfy the condition of the sum of the TiO$_2$ and SiO$_2$ contents.

As shown in Table 5, no undercut is formed (indicated by "A") and the bead shape is very good (indicated by "A") in the samples that satisfy the conditions on the wire contents. At least one of the undercut and the bead shape is evaluated as defective (indicated by "C") in the samples that do not satisfy the conditions on the wire contents.

That is, it is confirmed that no undercut is formed and a good bead shape can be obtained when, in the composition of the trailing electrode, the sum of the TiO$_2$ and SiO$_2$ contents satisfies the above-described conditions, and preferably, the TiO$_2$ content and the SiO$_2$ content satisfy the above-described conditions.

Although the tandem gas-shielded arc welding method according to the embodiment of the present invention has been specifically described with the embodiment and examples, the gist of the present invention should not be limited to the description and should be broadly interpreted in accordance with the description of the scope of the claims.

## Claims

1. A tandem gas-shielded arc welding method that uses a leading electrode and a trailing electrode to perform horizontal fillet welding, the method comprising:

   setting the leading electrode and the trailing electrode such that the leading electrode and the trailing electrode have a reverse polarity;
   setting a torch angle $\theta_L$ of the leading electrode, a carbon dioxide gas being used as a shielding gas for the leading electrode;
   setting a torch angle $\theta_T$ of the trailing electrode in the following range: $40° \leq \theta_T \leq 60°$, the trailing electrode using a flux-cored wire, the carbon dioxide gas being used as the shielding gas for the trailing electrode,
   wherein the torch angles refer to angles $\theta_L$ and $\theta_T$ respectively formed between a horizontally disposed lower plate and the leading electrode and the lower plate and the trailing electrode; and
   setting a welding voltage $V_L$ of the leading electrode in a range from 26 to 38 V and a welding current $I_L$ of the leading electrode in a range from 350 to 550 A, wherein the welding voltage $V_L$ in V and the welding current $I_L$ in A satisfy conditions represented in the following expression (1):

$$56 \leq \frac{V_L \cdot 10^3}{I_L} \leq 84$$

   the method being **characterized in that** the torch angle $\theta_L$ of the leading electrode is set in the following range: $5° \leq \theta_L < 40°$, and **in that** the leading electrode uses a solid wire.

2. The tandem gas-shielded arc welding method according to Claim 1,
   wherein the welding current $I_L$ in A, the welding voltage $V_L$ in V, a wire melting speed $W_{mL}$ in g/min, a wire diameter $R_L$ in mm, and a distance $E_L$ in mm between a tip and base metal of the leading electrode satisfy conditions represented by the following expressions (2) and (3):

19

$$5 \le \frac{E_L}{R_L} \le 20 \quad \text{expression (2)}$$

$$38 \le \frac{V_L{}^2 \cdot W_{mL} \cdot 10^3}{I_L{}^2 \cdot E_L} \le 48 \quad \text{expression (3).}$$

3. The tandem gas-shielded arc welding method according to Claim 2, wherein the wire diameter $R_L$ in mm and the distance $E_L$ in mm between the tip and the base metal satisfy conditions represented by the following expression (2-2):

$$5 \le \frac{E_L}{R_L} \le 15 \quad \text{expression (2-2).}$$

4. The tandem gas-shielded arc welding method according to Claim 1, wherein the welding current $I_L$ in A, the welding voltage $V_L$ in V, a wire melting speed $W_{mL}$ in g/min, a wire diameter $R_L$ in mm, and a distance $E_L$ in mm between a tip and base metal of the leading electrode satisfy conditions represented by the following expressions (2) and (3):

$$5 \le \frac{E_L}{R_L} \le 20 \quad \text{expression (2),}$$

$$38 \le \frac{V_L{}^2 \cdot W_{mL} \cdot 10^3}{I_L{}^2 \cdot E_L} \le 48 \quad \text{expression (3),}$$

and
wherein a distance $E_T$ between a tip and the base metal of the trailing electrode is longer than the distance $E_L$ between the tip and the base metal of the leading electrode.

5. The tandem gas-shielded arc welding method according to Claim 1, wherein the welding current $I_L$ in A, the welding voltage $V_L$ in V, a wire melting speed $W_{mL}$ in g/min, a wire diameter $R_L$ in mm, and a distance $E_L$ in mm between a tip and base metal of the leading electrode satisfy conditions represented by the following expressions (2) and (3):

$$5 \le \frac{E_L}{R_L} \le 20 \quad \text{expression (2),}$$

$$38 \le \frac{V_L{}^2 \cdot W_{mL} \cdot 10^3}{I_L{}^2 \cdot E_L} \le 48 \quad \text{expression (3),}$$

wherein the wire diameter $R_L$ in mm and the distance $E_L$ in mm between the tip and the base metal satisfy conditions represented by the following expression (2-2):

$$5 \le \frac{E_L}{R_L} \le 15 \quad \text{expression (2-2),}$$

and

wherein a distance $E_T$ between a tip and the base metal of the trailing electrode is longer than the distance $E_L$ between the tip and the base metal of the leading electrode.

6. The tandem gas-shielded arc welding method according to any one of Claims 1 to 5,
wherein the torch angle $\theta_L$ of the leading electrode is in the following range: $5° \leq \theta_L \leq 25°$.

7. The tandem gas-shielded arc welding method according to any one of Claims 1 to 5,
wherein a welding current $I_T$ in A, a welding voltage $V_T$ in V, a wire feed speed $W_{fT}$ in m/min, and a wire radius $r_T$ in mm of the trailing electrode satisfy conditions represented by the following expressions (4) and (5):

$$5.00 \leq \frac{I_T \cdot V_T \cdot 10^{-8}}{W_{fT} \cdot \pi \ r_T^{\ 2}} \leq 7.00 \qquad \text{expression (4)}$$

$$\frac{I_T^{\ 2} \cdot 10^{-3}}{V_T} \leq 5.00 \qquad \text{expression (5).}$$

8. The tandem gas-shielded arc welding method according to any one of Claims 1 to 5,
wherein, in the flux-cored wire of the trailing electrode, the sum of a $TiO_2$ content and an $SiO_2$ content are 5.0 to 9.5% by mass of a total mass of the wire.

9. The tandem gas-shielded arc welding method according to Claim 8,
wherein the flux-cored wire of the trailing electrode contains 4.5 to 9.0% $TiO_2$ by mass, 0.5 to 0.8% $SiO_2$ by mass, 0.02 to 0.09% C by mass, 0.3 to 0.75% Si by mass, and 2.0 to 3.0% Mn by mass of the total mass of the wire.

**Patentansprüche**

1. Tandem-Schutzgasschweißverfahren, das eine vordere Elektrode und eine hintere Elektrode verwendet, um ein horizontales Kehlnahtschweißen durchzuführen, wobei das Verfahren umfasst:

das Einstellen der vorderen Elektrode und der hinteren Elektrode derart, dass die vordere Elektrode und die hintere Elektrode eine umgekehrte Polarität aufweisen;
das Einstellen eines Brenneranstellwinkels $\theta_L$ der vorderen Elektrode, wobei ein Kohlenstoffdioxidgas als ein Schutzgas für die vordere Elektrode verwendet wird;
das Einstellen eines Brenneranstellwinkels $\theta_T$ der hinteren Elektrode in den folgenden Bereich: $40° \leq \theta_T \leq 60°$, wobei die hintere Elektrode einen Fülldraht verwendet, wobei das Kohlenstoffdioxidgas als das Schutzgas für die hintere Elektrode verwendet wird,
wobei sich die Brenneranstellwinkel auf die Winkel $\theta_L$ bzw. $\theta_T$ beziehen, die zwischen einer horizontal angeordneten unteren Platte und der vorderen Elektrode und der unteren Platte und der hinteren Elektrode gebildet sind; und
das Einstellen einer Schweißspannung $V_L$ der vorderen Elektrode in einem Bereich von 26 bis 38 V und eines Schweißstroms $I_L$ der vorderen Elektrode in einem Bereich von 350 bis 550 A,
wobei die Schweißspannung $V_L$ in V und der Schweißstrom $I_L$ in A die Bedingungen erfüllen, die in dem folgenden Ausdruck (1) dargestellt sind:

$$56 \leq \frac{V_L \cdot 10^3}{I_L} \leq 84$$

wobei das Verfahren **dadurch gekennzeichnet ist, dass** der Brenneranstellwinkel $\theta_L$ der vorderen Elektrode in dem folgenden Bereich eingestellt ist: $5° \leq \theta_L < 40°$, und dass die vordere Elektrode einen festen Draht verwendet.

**2.** Tandem-Schutzgasschweißverfahren nach Anspruch 1,
wobei der Schweißstrom $I_L$ in A, die Schweißspannung $V_L$ in V, eine Drahtschmelzgeschwindigkeit $W_{mL}$ in g/min, ein Drahtdurchmesser $R_L$ in mm und ein Abstand $E_L$ in mm zwischen einer Spitze und einem Basismetall der vorderen Elektrode die durch die folgenden Ausdrücke (2) und (3) dargestellten Bedingungen erfüllen:

$$5 \le \frac{E_L}{R_L} \le 20 \quad \text{Ausdruck (2)}$$

$$38 \le \frac{V_L{}^2 \cdot W_{mL} \cdot 10^3}{I_L{}^2 \cdot E_L} \le 48 \quad \text{Ausdruck (3).}$$

**3.** Tandem-Schutzgasschweißverfahren nach Anspruch 2,
wobei der Drahtdurchmesser $R_L$ in mm und der Abstand $E_L$ in mm zwischen der Spitze und dem Basismetall die durch den folgenden Ausdruck (2-2) dargestellten Bedingungen erfüllen:

$$5 \le \frac{E_L}{R_L} \le 15 \quad \text{Ausdruck (2-2).}$$

**4.** Tandem-Schutzgasschweißverfahren nach Anspruch 1,
wobei der Schweißstrom $I_L$ in A, die Schweißspannung $V_L$ in V, eine Drahtschmelzgeschwindigkeit $W_{mL}$ in g/min, ein Drahtdurchmesser $R_L$ in mm und ein Abstand $E_L$ in mm zwischen einer Spitze und einem Basismetall der vorderen Elektrode die durch die folgenden Ausdrücke (2) und (3) dargestellten Bedingungen erfüllen:

$$5 \le \frac{E_L}{R_L} \le 20 \quad \text{Ausdruck (2)}$$

$$38 \le \frac{V_L{}^2 \cdot W_{mL} \cdot 10^3}{I_L{}^2 \cdot E_L} \le 48 \quad \text{Ausdruck (3),}$$

wobei ein Abstand $E_T$ zwischen einer Spitze und dem Basismetall der hinteren Elektrode länger ist als der Abstand $E_L$ zwischen der Spitze und dem Basismetall der vorderen Elektrode.

**5.** Tandem-Schutzgasschweißverfahren nach Anspruch 1,
wobei der Schweißstrom $I_L$ in A, die Schweißspannung $V_L$ in V, eine Drahtschmelzgeschwindigkeit $W_{mL}$ in g/min, ein Drahtdurchmesser $R_L$ in mm und ein Abstand $E_L$ in mm zwischen einer Spitze und einem Basismetall der vorderen Elektrode die durch die folgenden Ausdrücke (2) und (3) dargestellten Bedingungen erfüllen:

$$5 \le \frac{E_L}{R_L} \le 20 \quad \text{Ausdruck (2)}$$

$$38 \le \frac{V_L{}^2 \cdot W_{mL} \cdot 10^3}{I_L{}^2 \cdot E_L} \le 48 \quad \text{Ausdruck (3),}$$

wobei der Drahtdurchmesser $R_L$ in mm und der Abstand $E_L$ in mm zwischen der Spitze und dem Basismetall die durch den folgenden Ausdruck (2-2) dargestellten Bedingungen erfüllen:

$$5 \leq \frac{E_L}{R_L} \leq 15 \quad \text{Ausdruck (2-2),}$$

wobei ein Abstand $E_T$ zwischen einer Spitze und dem Basismetall der hinteren Elektrode länger ist als der Abstand $E_L$ zwischen der Spitze und dem Basismetall der vorderen Elektrode.

**6.** Tandem-Schutzgasschweißverfahren nach einem der Ansprüche 1 bis 5, wobei der Brenneranstellwinkel $\theta_L$ der vorderen Elektrode in dem folgenden Bereich ist: $5° \leq \theta_L \leq 25°$.

**7.** Tandem-Schutzgasschweißverfahren nach einem der Ansprüche 1 bis 5, wobei ein Schweißstrom $I_T$ in A, eine Schweißspannung $V_T$ in V, eine Drahtvorschubgeschwindigkeit $W_{fT}$ in m/min und ein Drahtdurchmesser $R_T$ in mm der hinteren Elektrode die durch die folgenden Ausdrücke (4) und (5) dargestellten Bedingungen erfüllen:

$$5,00 \leq \frac{I_T \cdot V_T \cdot 10^{-8}}{W_{fT} \cdot \pi \, r_T^{\,2}} \leq 7,00 \qquad \text{Ausdruck (4)}$$

$$\frac{I_T^{\,2} \cdot 10^{-3}}{V_T} \leq 5,00 \qquad \text{Ausdruck (5).}$$

**8.** Tandem-Schutzgasschweißverfahren nach einem der Ansprüche 1 bis 5, wobei die Gesamtheit aus einem $TiO_2$-Gehalt und einem $SiO_2$-Gehalt in dem Fülldraht der hinteren Elektrode 5,0 bis 9,5 Massen-% einer Gesamtmasse des Drahtes beträgt.

**9.** Tandem-Schutzgasschweißverfahren nach Anspruch 8, wobei der Fülldraht der hinteren Elektrode 4,5 bis 9,0 Massen-% $TiO_2$, 0,5 bis 0,8 Massen-% $SiO_2$, 0,02 bis 0,09 Massen-% C, 0,3 bis 0,75 Massen-% Si und 2,0 bis 3,0 Massen-% Mn von der Gesamtmasse des Drahtes enthält.

**Revendications**

**1.** Procédé de soudage à l'arc sous protection gazeuse tandem qui utilise une électrode de tête et une électrode de queue pour réaliser un soudage en cordon horizontal, le procédé comprenant :

régler l'électrode de tête et l'électrode de queue de sorte que l'électrode de tête et l'électrode de queue ont une polarité inverse ;
régler un angle de chalumeau $\theta_L$ de l'électrode de tête, un gaz de dioxyde de carbone étant utilisé comme un gaz protecteur pour l'électrode de tête ;
régler un angle de chalumeau $\theta_T$ de l'électrode de queue dans la plage suivante : $40° \leq \theta_T \leq 60°$, l'électrode de queue utilisant un fil fourré, le gaz de dioxyde de carbone étant utilisé comme le gaz protecteur pour l'électrode de queue,
dans lequel les angles de chalumeau désignent des angles $\theta_L$ et $\theta_T$ respectivement formés entre une plaque inférieure disposée horizontalement et l'électrode de tête et la plaque inférieure et l'électrode de queue ; et
régler une tension de soudage $V_L$ de l'électrode de tête dans une plage de 26 à 38 V et un courant de soudage $I_L$ de l'électrode de tête dans une plage de 350 à 550 A, dans lequel la tension de soudage $V_L$ en V et le courant de soudage $I_L$ en A satisfont des conditions représentées dans l'expression suivante (1) :

$$56 \leq \frac{V_L \cdot 10^3}{I_L} \leq 84$$

le procédé étant **caractérisé en ce que** l'angle de chalumeau $\theta_L$ de l'électrode de tête est réglé dans la plage suivante : $5° \leq \theta_L < 40°$, et **en ce que** l'électrode de tête utilise un fil solide.

2.  Procédé de soudage à l'arc sous protection gazeuse tandem selon la revendication 1,
    dans lequel le courant de soudage $I_L$ en A, la tension de soudage $V_L$ en V, une vitesse de fonte de fil $W_{mL}$ en g/min, un diamètre de fil $R_L$ en mm et une distance $E_L$ en mm entre une pointe et le métal de base de l'électrode de tête satisfont des conditions représentées par les expressions suivantes (2) et (3) :

$$5 \leq \frac{E_L}{R_L} \leq 20$$

expression (2)

$$38 \leq \frac{V_L^2 \cdot W_{mL} \cdot 10^3}{I_L^2 \cdot E_L} \leq 48$$

expression (3).

3.  Procédé de soudage à l'arc sous protection gazeuse tandem selon la revendication 2,
    dans lequel le diamètre de fil $R_L$ en mm et la distance $E_L$ en mm entre la pointe et le métal de base satisfont des conditions représentées par l'expression suivante (2-2) :

$$5 \leq \frac{E_L}{R_L} \leq 15$$

expression (2-2).

4.  Procédé de soudage à l'arc sous protection gazeuse tandem selon la revendication 1,
    dans lequel le courant de soudage $I_L$ en A, la tension de soudage $V_L$ en V, une vitesse de fonte de fil $W_{mL}$ en g/min, un diamètre de fil $R_L$ en mm et une distance $E_L$ en mm entre une pointe et le métal de base de l'électrode de tête satisfont des conditions représentées par les expressions suivantes (2) et (3) :

$$5 \leq \frac{E_L}{R_L} \leq 20$$

expression (2),

$$38 \leq \frac{V_L^2 \cdot W_{mL} \cdot 10^3}{I_L^2 \cdot E_L} \leq 48$$

expression (3),

et
dans lequel une distance $E_T$ entre une pointe et le métal de base de l'électrode de queue est plus longue que la distance $E_L$ entre la pointe et le métal de base de l'électrode de tête.

5. Procédé de soudage à l'arc sous protection gazeuse tandem selon la revendication 1,
dans lequel le courant de soudage $I_L$ en A, la tension de soudage $V_L$ en V, une vitesse de fonte de fil $W_{mL}$ en g/min, un diamètre de fil $R_L$ en mm et une distance $E_L$ en mm entre une pointe et le métal de base de l'électrode de tête satisfont des conditions représentées par les expressions suivantes (2) et (3) :

$$5 \leq \frac{E_L}{R_L} \leq 20 \qquad \text{expression (2),}$$

$$38 \leq \frac{V_L^2 \cdot W_{mL} \cdot 10^3}{I_L^2 \cdot E_L} \leq 48 \qquad \text{expression (3),}$$

dans lequel le diamètre de fil $R_L$ en mm et la distance $E_L$ en mm entre la pointe et le métal de base satisfont des conditions représentées par l'expression suivante (2-2) :

$$5 \leq \frac{E_L}{R_L} \leq 15 \qquad \text{expression (2-2),}$$

dans lequel une distance $E_T$ entre une pointe et le métal de base de l'électrode de queue est plus longue que la distance $E_L$ entre la pointe et le métal de base de l'électrode de tête.

6. Procédé de soudage à l'arc sous protection gazeuse tandem selon l'une quelconque des revendications 1 à 5,
dans lequel l'angle de chalumeau $\theta_L$ de l'électrode de tête est dans la plage suivante : $5° \leq \theta_L \leq 25°$.

7. Procédé de soudage à l'arc sous protection gazeuse tandem selon l'une quelconque des revendications 1 à 5,
dans lequel un courant de soudage $I_T$ en A, une tension de soudage $V_T$ en V, une vitesse d'alimentation de fil $W_{fT}$ en m/min et un rayon de fil $r_T$ en mm de l'électrode de queue satisfont des conditions représentées par les expressions suivantes (4) et (5) :

$$5.00 \leq \frac{I_T \cdot V_T \cdot 10^{-8}}{W_{fT} \cdot \pi \, r_T^2} \leq 7.00 \qquad \text{expression (4)}$$

$$\frac{I_T{}^2 \cdot 10^{-3}}{V_T} \leq 5.00$$

expression (5).

8. Procédé de soudage à l'arc sous protection gazeuse tandem selon l'une quelconque des revendications 1 à 5, dans lequel, dans le fil fourré de l'électrode de queue, la somme d'une teneur en $TiO_2$ et d'une teneur en $SiO_2$ est de 5,0 à 9,5 % en masse d'une masse totale du fil.

9. Procédé de soudage à l'arc sous protection gazeuse tandem selon la revendication 8, dans lequel le fil fourré de l'électrode de queue contient 4,5 à 9,0 % en masse de $TiO_2$, 0,5 à 0,8 % en masse de $SiO_2$, 0,02 à 0,09 % en masse de C, 0,3 à 0,75 % en masse de Si, et 2,0 à 3,0 % en masse de Mn de la masse totale du fil.

FIG. 1A

DISTANCE
BETWEEN
ELECTRODES

$\phi_L$   $\phi_T$   CENTER LINE

CENTER LINE   PERPENDICULAR

WELDING
DIRECTION

5

4

40   G G   50

A   A   3

30   1

2

FIG. 1B

30   1

2

WELDING
DIRECTION   40   A   A   50

4   5

3   1

FIG. 1C

CENTER
LINE   $\theta_T$

2

5

50

A   4

$\theta_L$

1

$3_L$   $3_T$   40

## FIG. 2A

## FIG. 2B

FIG. 3A

FIG. 3B

FIG. 3C

FIG. 4A

FIG. 4B

FIG. 4C

FIG. 5A

2

3

1

SHALLOW
PENETRATION

FIG. 5B

2

3

1

DEEP
PENETRATION

FIG. 5C

2

b

1

a

c

3

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003071590 A
- JP 2004261839 A

- EP 2193869 A